# EUROPEAN PATENT APPLICATION

(11) **EP 4 832 432 A1**
(43) Date of publication of application: **28.10.2026**
(21) Application number: 25741399.7
(22) Date of filing: 09.01.2025
(51) Int. Cl.: H04L 41/0246

(54) **INTENT PROCESSING METHOD AND RELATED APPARATUS**

(30) Priority: 15.01.2024 CN 202410057520
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: MERH-IP Matias Erny Reichl Hoffmann Patentanwälte PartG mbB
(86) International application number: PCT/CN2025/071410
(87) International publication number: WO 2025/152837

(57) **Abstract**

This application provides an intent handling method and a related apparatus. In the method, a first device sends first indication information, where the first indication information indicates a lifecycle management phase of an intent instance. The lifecycle management phase includes at least one of a feasibility check phase, a resource reservation phase, a probe phase, or a fulfilment phase of the intent instance. The first device receives an intent management result obtained for the intent instance in the lifecycle management phase. It can be learned that, in the method, the intent lifecycle management phase is introduced to indicate at least one of the feasibility check phase, the resource reservation phase, the probe phase, or the fulfilment phase in which the intent instance can be used, to avoid direct fulfilment of the created intent instance, and help an intent execution system perform, after the first indication information indicates the corresponding lifecycle management phase, corresponding handling on the intent instance based on network deployment and a network status.

## Description

This application claims priority to Chinese Patent Application No. 202410057520.X, filed with the China National Intellectual Property Administration on January 15, 2024 and entitled "INTENT HANDLING METHOD AND RELATED APPARATUS", which is incorporated herein by reference in its entirety.

### TECHNICAL FIELD

This application relates to the field of communication technologies, and in particular, to an intent handling method and a related apparatus.

### BACKGROUND

As the quantity of network access devices increases and services become diversified, the operation becomes more complex. Network automation and intelligence are one of the important topics of networks. The objective of network automation and intelligence is to use various intelligence and automation technologies to reduce operating expenditure (operating expenditure, OPEX), improve service experience, and enable various vertical industries (for example, autonomous driving and smart city). With the continuous development of technologies and the increase of network complexity, it is more necessary to abstractly express operation requirements with the support of intents.

An intent is an expression of a system status expected by a user, and is used to describe a network or a service expected by the user. The intent does not define specific network or service configuration parameters or specify management tasks to be executed by a system. The intent allows the user to request a network and a service without knowing in detail how the network and service are provided. It is assumed that the system can automatically learn network and service behavior and use intelligent and automatic mechanisms to meet a user requirement expressed through the intent. An intent execution system performs intent translation based on intent information such as an intent object and an intent target, to obtain a network configuration parameter, and delivers the network configuration parameter to a corresponding network element for configuration, so that the corresponding network element performs execution.

However, a capability of the intent execution system is determined by network deployment and a network status, and changes in real time. In this case, how to perform intent handling is a problem to be resolved.

### SUMMARY

This application provides an intent handling method and a related apparatus, to facilitate intent handling based on network deployment and a network status.

According to a first aspect, this application provides an intent handling method. The method may be applied to an intent monitoring system, or a device or an apparatus in which the intent monitoring system is deployed. For ease of description, a first device is used as an example for description. In the method, the first device sends first indication information, where the first indication information indicates a lifecycle management phase of an intent instance. The lifecycle management phase includes at least one of a feasibility check phase, a resource reservation phase, a probe phase, or a fulfilment phase of the intent instance. Correspondingly, the first device receives an intent management result obtained for the intent instance in the lifecycle management phase.

It can be learned that, in the method, the intent lifecycle management phase is introduced to indicate at least one of the feasibility check phase, the resource reservation phase, the probe phase, or the fulfilment phase in which the intent instance can be used. In this way, in this application, immediate fulfilment of the intent instance after being created can be avoided, and this helps an intent execution system perform, after the first indication information indicates the corresponding lifecycle management phase, corresponding handling on the intent instance based on network deployment and a network status. Specifically, this application can achieve at least one of the following beneficial effects: feasibility check can be performed on the intent instance before fulfilment of the intent, and the intent instance is fulfilled when an expectation of the intent instance is met; resource reservation is performed before fulfilment of the intent instance, to ensure that sufficient resources are available to meet an expectation of the intent instance during intent fulfilment; a capability value of the intent instance is obtained in the probe phase before fulfilment of the intent instance, to facilitate selection of a target value expected by the intent, and avoid a problem that an expectation of the intent instance cannot be met due to a plurality of times of blind setting or a problem that better network performance cannot be obtained due to setting an excessively low target value; or the intent instance is fulfilled when the first device indicates to fulfill the intent instance in the fulfilment phase, to avoid a problem that the foregoing phases of intent negotiation cannot be performed because the created intent instance is directly fulfilled.

In an optional implementation, that the first device sends the first indication information includes: The first device sends a first request, where the first request is used to request to create the intent instance, the first request includes intent information and the first indication information, and the intent information includes an intent object and an intent target that are of the intent instance; and receives response information, where the response information includes an identifier of the intent instance. Optionally, the first request is used to request to create the intent instance. The intent instance is used to describe an expected status of a managed object. The intent object is information about the managed object. The intent target is a performance indicator of the managed object. It can be learned that, in this implementation, the intent instance is created based on the lifecycle management phase indicated by the first indication information, to avoid a problem such as information inconsistency caused by a case in which a plurality of intent instances need to be maintained for same intent information.

In an optional implementation, the lifecycle management phase indicated by the first indication information is the feasibility check phase, and the intent management result obtained for the intent instance in the lifecycle management phase is a feasibility check result obtained for the intent instance in the feasibility check phase. It can be learned that, in this implementation, the feasibility check result of the intent instance is received before the intent instance is fulfilled, so that whether the intent instance is feasible, that is, whether the intent target of the intent instance is satisfied, can be learned.

Optionally, receiving, by the first device, the feasibility check result includes: receiving, by the first device, a feasibility check report, where the feasibility check report includes the feasibility check result. Optionally, when the feasibility check result is infeasible, the feasibility check report further includes a reason for infeasibility, for example, an intent conflict or insufficient resources. In addition, the feasibility check report further includes the identifier of the intent instance.

In an optional implementation, the lifecycle management phase indicated by the first indication information is the resource reservation phase, and the intent management result obtained for the intent instance in the lifecycle management phase is a resource reservation result obtained for the intent instance in the resource reservation phase. It can be learned that, in this implementation, resource reservation is performed before fulfilment of the intent instance, so that sufficient resources can be ensured during fulfilment of the intent instance.

Optionally, receiving, by the first device, the resource reservation result includes: receiving, by the first device, a resource reservation report, where the resource reservation report includes the resource reservation result, for example, reserved or reservation failure. Optionally, the resource reservation report further includes a network device and/or a cell associated with a reserved resource, and a quantity or a proportion of reserved resources. The proportion is a proportion of the quantity of reserved resources to a total quantity of resources of the network device and/or the cell.

In an implementation, the lifecycle management phase indicated by the first indication information sent by the first device includes the feasibility check phase and the resource reservation phase. In this case, the intent management result received by the first device, for example, the feasibility check result and the resource reservation result described above, may be separately received, or may be received together. In another implementation, the lifecycle management phase indicated by the first indication information sent by the first device is the feasibility check phase, and the first device further sends a second request. The second request includes indication information of the resource reservation phase or the second request is used to request to modify the lifecycle management phase indicated by the first indication information to the resource reservation phase. In this case, the first device may separately receive the feasibility check result and the resource reservation result. Optionally, the first device sends the second request when there is a resource reservation requirement.

In an optional implementation, the lifecycle management phase indicated by the first indication information is the probe phase, the intent management result obtained for the intent instance in and the lifecycle management phase is an intent probe result obtained for the intent instance in the probe phase, where each intent probe result includes a capability value of the intent target of the intent instance. It can be learned that, in this implementation, the capability value of the intent target is obtained before fulfilment of the intent instance, to avoid a case in which the intent target cannot be achieved due to blind setting of a target value, or a case in which a better energy consumption effect and a better performance effect of a network cannot be obtained due to setting an excessively low target value.

Optionally, receiving, by the first device, the intent probe result includes: receiving, by the first device, an intent probe report, where the intent probe report includes at least one intent probe result. In addition, the intent probe report further includes the identifier of the intent instance. Each intent probe result includes a name of an intent target (for example, an energy consumption target and a rate target) and a capability value (for example, a current capability value and a capability value at a prediction time point or within prediction duration) of the corresponding intent target.

Optionally, after receiving the intent probe result, the first device further determines a target value (for example, an energy consumption target value and a downlink rate target value) of the intent target based on the intent probe result obtained for the intent instance in the probe phase, and sends the target value of the intent target. It can be learned that, in this implementation, the target value is determined based on the capability value of the currently probed intent target, to avoid a case in which the intent target cannot be achieved due to blind setting of a target value, or a case in which a network capability cannot be fully stimulated due to setting an excessively low target value.

Optionally, if the intent probe report includes at least two intent probe results, the first device may select a capability value included in one of the intent probe results as the target value of the intent target.

In an optional implementation, if the lifecycle management phase indicated by the first indication information is the fulfilment phase, the intent management result received by the first device is an intent execution result obtained for the intent instance in the fulfilment phase. It can be learned that, in this implementation, the first device indicates, by using the first indication information, to fulfill the intent instance, to avoid immediate fulfilment of the intent instance after being created.

In another optional implementation, the lifecycle management phase indicated by the first indication information is at least one of the feasibility check phase, the resource reservation phase, or the probe phase. After sending the first indication information and receiving the corresponding intent management result, the first device further sends second indication information, where the second indication information indicates to modify the lifecycle management phase of the intent instance to the fulfilment phase; and receives an intent execution result obtained for the intent instance in the fulfilment phase. It can be learned that, in this implementation, intent negotiation can be performed based on the foregoing lifecycle management phases, to avoid a problem of information inconsistency caused by repeatedly creating intent instances with same intent information, and enable the intent instance to be successfully fulfilled.

In an optional implementation, in addition to the lifecycle management phase indicated by the first indication information by the first device being or including the feasibility check phase, the first device further sends evaluation constraint information, where the evaluation constraint information includes indication information indicating a simulation technology, and/or indication information indicating to perform online simulation or offline simulation. For example, if the simulation technology indicated by the evaluation constraint information is a network digital twin (network digital twin, NDT), the feasibility check result is obtained by performing simulation evaluation by using the NDT technology. In addition, if the evaluation constraint information indicates to perform online simulation, the feasibility check result is obtained through online simulation evaluation; or if the evaluation constraint information indicates to perform offline simulation, the feasibility check result is obtained through offline simulation evaluation.

In another optional implementation, in addition to the lifecycle management phase indicated by the first indication information by the first device being or including the probe phase, the first device also sends the foregoing evaluation constraint information. For example, if the simulation technology indicated by the evaluation constraint information is an NDT, the intent probe result is obtained by performing simulation evaluation by using the NDT technology. In addition, if the evaluation constraint information indicates to perform online simulation, the intent probe result is obtained through online simulation evaluation; or if the evaluation constraint information indicates to perform offline simulation, the intent probe result is obtained through offline simulation evaluation.

In an optional implementation, the intent instance is a radio service intent instance, an intent object of the radio service intent instance includes geographical coverage area information of a network device or a cell, and an intent target of the radio service intent instance includes a delay target and/or a rate target. Optionally, for the radio service intent instance, one or more of the foregoing implementations may be used, and details are not described herein again.

In an optional implementation, the intent instance is a radio energy saving intent instance, an intent object of the radio energy saving intent instance includes geographical coverage area information of a network device or a cell, and an intent target of the radio energy saving intent instance includes an energy consumption target and/or a rate target. Optionally, for the radio energy saving intent instance, one or more of the foregoing implementations may be used, and details are not described herein again.

According to a second aspect, this application further provides an intent handling method. The method may be applied to an intent execution system, or a device or an apparatus in which the intent execution system is deployed. For ease of description, a second device is used as an example for description. In the method, the second device receives first indication information, where the first indication information indicates a lifecycle management phase of an intent instance. The lifecycle management phase includes at least one of a feasibility check phase, a resource reservation phase, a probe phase, or a fulfilment phase of the intent instance. The second device sends an intent management result obtained for the intent instance in the lifecycle management phase.

Optionally, the second device further manages the intent instance based on the lifecycle management phase indicated by the first indication information, to obtain the intent management result.

It can be learned that, in the method, the intent lifecycle management phase is introduced to indicate at least one of the feasibility check phase, the resource reservation phase, the probe phase, or the fulfilment phase in which the intent instance can be used. In this way, in this application, immediate fulfilment of the intent instance after being created can be avoided, and this helps handle the intent instance in the feasibility check phase, the resource reservation phase, the probe phase, or the fulfilment phase based on network deployment and a network status. Specifically, this application can achieve at least one of the following beneficial effects: feasibility check can be performed on the intent instance before fulfilment of the intent, and the intent instance is fulfilled when an expectation of the intent instance is met; resource reservation is performed before fulfilment of the intent instance, to ensure that sufficient resources are available to meet an expectation of the intent instance during intent fulfilment; a capability value of the intent instance is obtained in the probe phase before fulfilment of the intent instance, to facilitate selection of a target value expected by the intent, and avoid a problem that an expectation of the intent instance cannot be met due to a plurality of times of blind setting or a problem that better network performance cannot be obtained due to setting an excessively low target value; or the intent instance is fulfilled when the first indication information indicates to fulfill the intent instance in the fulfilment phase, to avoid a problem that the foregoing phases of intent negotiation cannot be performed because the created intent instance is directly fulfilled.

In an optional implementation, that the second device receives the first indication information includes: The second device receives a first request, where the first request includes intent information and the first indication information, and the intent information includes an intent object and an intent target that are of the intent instance. Correspondingly, the method further includes: The second device creates the intent instance based on the intent information, where the intent instance includes the intent object and the intent target that are expected, and further includes information about the lifecycle management phase indicated by the first indication information; and sends response information, where the response information includes an identifier of the intent instance.

In an optional implementation, the lifecycle management phase indicated by the first indication information is the feasibility check phase, and the intent management result obtained for the intent instance in the lifecycle management phase includes a feasibility check result obtained for the intent instance in the feasibility check phase. Correspondingly, that the second device further manages the intent instance based on the lifecycle management phase indicated by the first indication information, to obtain the intent management result includes: The second device performs feasibility check on the intent instance, to obtain the feasibility check result.

Optionally, sending, by the second device, the feasibility check result includes: sending, by the second device, a feasibility check report, where the feasibility check report includes the feasibility check result. Optionally, when the feasibility check result is infeasible, the feasibility check report further includes a reason for infeasibility, for example, an intent conflict or insufficient resources. In addition, the feasibility check report further includes the identifier of the intent instance.

In an optional implementation, the lifecycle management phase indicated by the first indication information is the resource reservation phase, and the intent management result obtained for the intent instance in the lifecycle management phase includes a resource reservation result obtained for the intent instance in the resource reservation phase. It can be learned that, in this implementation, the second device reserves a resource for the intent instance before fulfilment of the intent instance, so that sufficient resources can be ensured during fulfilment of the intent instance.

Correspondingly, that the second device further manages the intent instance based on the lifecycle management phase indicated by the first indication information, to obtain the intent management result includes: The second device reserves a corresponding resource for the intent instance, to obtain the resource reservation result.

Optionally, sending, by the second device, the resource reservation result includes: sending, by the second device, a resource reservation report, where the resource reservation report includes the resource reservation result, for example, reserved or reservation failure. Optionally, the resource reservation report further includes a network device and/or a cell associated with a reserved resource, and a quantity or a proportion of reserved resources. The proportion is a proportion of the quantity of reserved resources to a total quantity of resources of the network device and/or the cell.

In an implementation, the lifecycle management phase indicated by the first indication information received by the second device includes the feasibility check phase and the resource reservation phase. In this case, the intent management result sent by the second device, for example, the feasibility check result and the resource reservation result described above, may be separately sent, or may be sent together.

In another implementation, the lifecycle management phase indicated by the first indication information received by the second device is the feasibility check phase, and the second device may further receive a second request. The second request includes indication information of the resource reservation phase or the second request is used to request to modify the lifecycle management phase indicated by the first indication information to the resource reservation phase. In this way, the second device may modify a previous value of the lifecycle management phase to a value of the resource reservation phase. For example, the previous value is a value of the feasibility check phase, and the value after the modification is a value of the resource reservation phase. In this implementation, the second device separately sends the feasibility check result and the resource reservation result.

In an implementation, the lifecycle management phase indicated by the first indication information is the probe phase, the intent management result obtained for the intent instance in and the lifecycle management phase includes an intent probe result obtained for the intent instance in the probe phase, where each intent probe result includes a capability value of the intent target of the intent instance. It can be learned that, in this implementation, the capability value of the intent target may be probed before fulfilment of the intent instance, to avoid a case in which the intent target cannot be achieved due to blind setting of a target value, or a case in which a better energy consumption effect and a better performance effect of a network cannot be obtained due to setting an excessively low target value.

Optionally, sending, by the second device, the intent probe result includes: sending, by the second device, an intent probe report, where the intent probe report includes at least one intent probe result. In addition, the intent probe report further includes the identifier of the intent instance. Each intent probe result includes a name of an intent target (for example, an energy consumption target and a rate target) and a capability value (for example, a current capability value and a capability value at a prediction time point or within prediction duration) of the corresponding intent target. Correspondingly, the second device performs probe evaluation on the intent instance, to obtain the intent probe result or the intent probe report.

In an optional implementation, after sending the intent probe report or the intent probe result to the first device, the second device further receives a target value of the intent target from the first device, where the target value of the intent target is determined by the first device based on the capability value of the intent target. It can be learned that, in this implementation, the target value is determined by the first device based on the capability value of the currently probed intent target, to avoid a case in which the intent target cannot be achieved due to blind setting of a target value, or a case in which a network capability cannot be fully stimulated due to setting an excessively low target value.

In an optional implementation, if the lifecycle management phase indicated by the first indication information is the fulfilment phase, the intent management result sent by the second device is an intent execution result obtained for the intent instance in the fulfilment phase. Optionally, the second device fulfills the intent instance to obtain the intent execution result. It can be learned that, in this implementation, the first indication information indicates to fulfill the intent instance, to avoid immediate fulfilment of the intent instance after being created.

In another optional implementation, the lifecycle management phase indicated by the first indication information is at least one of the feasibility check phase, the resource reservation phase, or the probe phase. After receiving the first indication information and sending the corresponding intent management result, the second device further receives second indication information, where the second indication information indicates to modify the lifecycle management phase of the intent instance to the fulfilment phase. Optionally, the second device modifies the lifecycle management phase of the intent instance to the fulfilment phase, and fulfills the intent instance, to obtain the intent execution result. The second device sends the intent execution result. It can be learned that, in this implementation, intent negotiation can be performed based on the foregoing lifecycle management phases, to avoid a problem of information inconsistency caused by repeatedly creating intent instances with same intent information, to enable the intent instance to be successfully fulfilled.

In an optional implementation, in addition to the lifecycle management phase indicated by the first indication information received by the second device being or including the feasibility check phase, the second device further receives evaluation constraint information, where the evaluation constraint information includes indication information indicating a simulation technology, and/or indication information indicating to perform online simulation or offline simulation. For example, if the simulation technology indicated by the evaluation constraint information is an NDT, the feasibility check result is obtained by performing simulation evaluation by using the NDT technology. In addition, if the evaluation constraint information indicates to perform online simulation, the feasibility check result is obtained through online simulation evaluation; or if the evaluation constraint information indicates to perform offline simulation, the feasibility check result is obtained through offline simulation evaluation. In another optional implementation, in addition to the lifecycle management phase indicated by the first indication information received by the second device being or including the probe phase, the second device also receives the foregoing evaluation constraint information. For example, if the simulation technology indicated by the evaluation constraint information is an NDT, the intent probe result is obtained by performing simulation evaluation by using the NDT technology. In addition, if the evaluation constraint information indicates to perform online simulation, the intent probe result is obtained through online simulation evaluation; or if the evaluation constraint information indicates to perform offline simulation, the intent probe result is obtained through offline simulation evaluation.

Optionally, the evaluation constraint information may be included in the first request that carries the first indication information.

In an optional implementation, the intent instance is a radio service intent instance, an intent object of the radio service intent instance includes geographical coverage area information of a network device or a cell, and an intent target of the radio service intent instance includes a delay target and/or a rate target. Optionally, for the radio service intent instance, one or more of the foregoing implementations may be used, and details are not described herein again.

In an optional implementation, the intent instance is a radio energy saving intent instance, an intent object of the radio energy saving intent instance includes geographical coverage area information of a network device or a cell, and an intent target of the radio energy saving intent instance includes an energy consumption target and/or a rate target. Optionally, for the radio energy saving intent instance, one or more of the foregoing implementations may be used, and details are not described herein again.

According to a third aspect, this application provides an intent handling method for a radio service intent instance. The method may be applied to an intent monitoring system, or a device or an apparatus in which the intent monitoring system is deployed. For ease of description, a first device is used as an example for description. In the method, the first device sends first indication information, where the first indication information indicates a lifecycle management phase of a radio service intent instance. The lifecycle management phase includes at least one of a feasibility check phase, a resource reservation phase, or a fulfilment phase of the radio service intent instance. Correspondingly, the first device receives an intent management result obtained for the radio service intent instance in the lifecycle management phase.

It can be learned that, in the method, the intent lifecycle management phase is introduced to indicate at least one of the feasibility check phase, the resource reservation phase, or the fulfilment phase that the radio service intent instance can be used in. In this way, in this application, immediate fulfilment of the intent instance after being created can be avoided, and this helps an intent execution system perform, after the first indication information indicates the lifecycle management phase that the intent instance is used in, corresponding handling on the intent instance based on network deployment and a network status. Specifically, this application can achieve at least one of the following beneficial effects: feasibility check can be performed on the radio service intent instance before radio service intent fulfilment, and the radio service intent instance is fulfilled when an expectation of the radio service intent instance is met; resource reservation is performed before fulfilment of the radio service intent instance, to ensure that sufficient resources are available to meet an expectation of the radio service intent instance during intent fulfilment; or the radio service intent instance is fulfilled when the first device indicates to fulfill the radio service intent instance in the fulfilment phase, to avoid a problem that the foregoing phases of intent negotiation cannot be performed because the created radio service intent instance is directly fulfilled.

In an optional implementation, that the first device sends the first indication information includes: The first device sends a first request, where the first request is used to request to create the radio service intent instance, the first request includes intent information and the first indication information, and the intent information includes an intent object and an intent target that are of the radio service intent instance. The intent object includes geographical coverage area information of a network device or a cell, and the intent target includes a delay target and a rate target. Optionally, the first request is used to request to create the intent instance. The intent instance is used to describe an expected status of a managed object. The intent object is information about the managed object. The intent target is a performance indicator of the managed object. It can be learned that, in this implementation, the radio service intent instance is created based on the lifecycle management phase indicated by the first indication information, to avoid a problem such as information inconsistency caused by a case in which a plurality of radio service intent instances need to be maintained for same intent information.

In an optional implementation, the lifecycle management phase indicated by the first indication information is the feasibility check phase, and the intent management result obtained for the radio service intent instance in the lifecycle management phase is a feasibility check result obtained for the radio service intent instance in the feasibility check phase. It can be learned that, in this implementation, the feasibility check result of the radio service intent instance is received before the radio service intent instance is fulfilled, so that whether the radio service intent instance is feasible, that is, whether the intent target of the radio service intent instance is satisfied, can be learned.

Optionally, receiving, by the first device, the feasibility check result includes: receiving, by the first device, a feasibility check report, where the feasibility check report includes the feasibility check result. Optionally, when the feasibility check result is infeasible, the feasibility check report further includes a reason for infeasibility, for example, an intent conflict or insufficient resources. In addition, the feasibility check report further includes an identifier of the intent instance.

In an optional implementation, the lifecycle management phase indicated by the first indication information is the resource reservation phase, and the intent management result obtained for the radio service intent instance in the lifecycle management phase is a resource reservation result obtained for the radio service intent instance in the resource reservation phase. It can be learned that, in this implementation, resource reservation is performed before fulfilment of the radio service intent instance, so that sufficient resources can be ensured during fulfilment of the radio service intent instance.

Optionally, receiving, by the first device, the resource reservation result includes: receiving, by the first device, a resource reservation report, where the resource reservation report includes the resource reservation result, for example, reserved or reservation failure. Optionally, the resource reservation report further includes a network device and/or a cell associated with a reserved resource, and a quantity or a proportion of reserved resources. The proportion is a proportion of the quantity of reserved resources to a total quantity of resources of the network device and/or the cell. Optionally, the reserved resource includes at least one of a radio physical resource block (physical resource block, PRB) resource, a quantity of radio resource controller (radio resource controller, RRC) connections, or a data radio bearer (data radio bearer, DRB) resource.

In an implementation, the lifecycle management phase indicated by the first indication information sent by the first device includes the feasibility check phase and the resource reservation phase. In this case, the intent management result received by the first device, for example, the feasibility check result and the resource reservation result described above, may be separately received, or may be received together. In another implementation, the lifecycle management phase indicated by the first indication information sent by the first device is the feasibility check phase, and the first device further sends a second request. The second request includes indication information of the resource reservation phase or the second request is used to request to modify the lifecycle management phase indicated by the first indication information to the resource reservation phase. In this case, the first device may separately receive the feasibility check result and the resource reservation result. Optionally, the first device sends the second request when there is a resource reservation requirement.

In an optional implementation, if the lifecycle management phase indicated by the first indication information is the fulfilment phase, the intent management result received by the first device is an intent execution result obtained for the radio service intent instance in the fulfilment phase. It can be learned that, in this implementation, the first device indicates, by using the first indication information, to fulfill the radio service intent instance, to avoid immediate fulfilment of the radio service intent instance after being created.

In another optional implementation, the lifecycle management phase indicated by the first indication information is at least one of the feasibility check phase or the resource reservation phase. After sending the first indication information and receiving the corresponding intent management result, the first device further sends second indication information, where the second indication information indicates to modify the lifecycle management phase of the radio service intent instance to the fulfilment phase; and receives an intent execution result obtained for the radio service intent instance in the fulfilment phase. It can be learned that, in this implementation, intent negotiation can be performed based on the foregoing lifecycle management phases, to avoid a problem of information inconsistency caused by repeatedly creating radio service intent instances with same intent information, and enable the radio service intent instance to be successfully fulfilled.

In an optional implementation, in addition to the lifecycle management phase indicated by the first indication information by the first device being or including the feasibility check phase, the first device further sends evaluation constraint information, where the evaluation constraint information includes indication information indicating a simulation technology, and/or indication information indicating to perform online simulation or offline simulation. For example, if the simulation technology indicated by the evaluation constraint information is a network digital twin (network digital twin, NDT), the feasibility check result is obtained by performing simulation evaluation by using the NDT technology. In addition, if the evaluation constraint information indicates to perform online simulation, the feasibility check result is obtained through online simulation evaluation; or if the evaluation constraint information indicates to perform offline simulation, the feasibility check result is obtained through offline simulation evaluation.

Optionally, the evaluation constraint information may be included in the first request that carries the first indication information.

According to a fourth aspect, this application further provides an intent handling method for a radio service intent instance. The intent handling method corresponds to the intent handling method in the third aspect, and is described from a perspective of a second device. In the intent handling method, the second device receives first indication information, where the first indication information indicates a lifecycle management phase of a radio service intent instance. The lifecycle management phase includes at least one of a feasibility check phase, a resource reservation phase, or a fulfilment phase of the radio service intent instance. The second device sends an intent management result obtained for the radio service intent instance in the lifecycle management phase.

Optionally, the second device further manages the radio service intent instance based on the lifecycle management phase indicated by the first indication information, to obtain the intent management result.

It can be learned that, in the method, the intent lifecycle management phase is introduced to indicate at least one of the feasibility check phase, the resource reservation phase, or the fulfilment phase that the radio service intent instance can be used in. In this way, in this application, immediate fulfilment of the intent instance after being created can be avoided, and this helps handle the intent instance in the feasibility check phase, the resource reservation phase, or the fulfilment phase based on network deployment and a network status. Specifically, this application can achieve at least one of the following beneficial effects: feasibility check can be performed on the radio service intent instance before fulfilment of the radio service intent instance, and the radio service intent instance is fulfilled when an expectation of the radio service intent instance is met; resource reservation is performed before fulfilment of the radio service intent instance, to ensure that sufficient resources are available to meet an expectation of the radio service intent instance during radio service intent fulfilment; or the radio service intent instance is fulfilled when the first indication information indicates to fulfill the radio service intent instance in the fulfilment phase, to avoid a problem that the foregoing phases of intent negotiation cannot be performed because the created radio service intent instance is directly fulfilled.

In an optional implementation, that the second device receives the first indication information includes: The second device receives a first request, where the first request includes intent information and the first indication information, and the intent information includes an intent object and an intent target that are of the radio service intent instance. The intent object includes geographical coverage area information of a network device or a cell, and the intent target includes a delay target and a rate target. Correspondingly, the method further includes: The second device creates the radio service intent instance based on the intent information, where the radio service intent instance includes the intent object and the intent target that are expected, and further includes information about the lifecycle management phase indicated by the first indication information.

In an optional implementation, the lifecycle management phase indicated by the first indication information is the feasibility check phase, and the intent management result obtained for the radio service intent instance in the lifecycle management phase includes a feasibility check result obtained for the radio service intent instance in the feasibility check phase. Correspondingly, that the second device further manages the radio service intent instance based on the lifecycle management phase indicated by the first indication information, to obtain the intent management result includes: The second device performs feasibility check on the radio service intent instance, to obtain the feasibility check result.

Optionally, sending, by the second device, the feasibility check result includes: sending, by the second device, a feasibility check report, where the feasibility check report includes the feasibility check result. Optionally, when the feasibility check result is infeasible, the feasibility check report further includes a reason for infeasibility, for example, an intent conflict or insufficient resources. In addition, the feasibility check report further includes an identifier of the radio service intent instance.

In an optional implementation, the lifecycle management phase indicated by the first indication information is the resource reservation phase, and the intent management result obtained for the radio service intent instance in the lifecycle management phase includes a resource reservation result obtained for the radio service intent instance in the resource reservation phase. It can be learned that, in this implementation, the second device reserves a resource for the radio service intent instance before fulfilment of the radio service intent instance, so that sufficient resources can be ensured during fulfilment of the radio service intent instance.

Correspondingly, that the second device further manages the radio service intent instance based on the lifecycle management phase indicated by the first indication information, to obtain the intent management result includes: The second device reserves a corresponding resource for the radio service intent instance, to obtain the resource reservation result.

Optionally, sending, by the second device, the resource reservation result includes: sending, by the second device, a resource reservation report, where the resource reservation report includes the resource reservation result, for example, reserved or reservation failure. Optionally, the resource reservation report further includes a network device and/or a cell associated with a reserved resource, and a quantity or a proportion of reserved resources. The proportion is a proportion of the quantity of reserved resources to a total quantity of resources of the network device and/or the cell.

In an implementation, the lifecycle management phase indicated by the first indication information received by the second device includes the feasibility check phase and the resource reservation phase. In this case, the intent management result sent by the second device, for example, the feasibility check result and the resource reservation result described above, may be separately sent, or may be sent together.

In another implementation, the lifecycle management phase indicated by the first indication information received by the second device is the feasibility check phase, and the second device may further receive a second request. The second request includes indication information of the resource reservation phase or the second request is used to request to modify the lifecycle management phase indicated by the first indication information to the resource reservation phase. In this way, the second device may modify a previous value of the lifecycle management phase to a value of the resource reservation phase. For example, the previous value is a value of the feasibility check phase, and the value after the modification is a value of the resource reservation phase. In this implementation, the second device separately sends the feasibility check result and the resource reservation result.

In an optional implementation, if the lifecycle management phase indicated by the first indication information is the fulfilment phase, the intent management result sent by the second device is an intent execution result obtained for the radio service intent instance in the fulfilment phase. Optionally, the second device fulfills the radio service intent instance to obtain the intent execution result. It can be learned that, in this implementation, the first indication information indicates to fulfill the radio service intent instance, to avoid immediate fulfilment of the radio service intent instance after being created.

In another optional implementation, the lifecycle management phase indicated by the first indication information is at least one of the feasibility check phase or the resource reservation phase. After receiving the first indication information and sending the corresponding intent management result, the second device further receives second indication information, where the second indication information indicates to modify the lifecycle management phase of the radio service intent instance to the fulfilment phase. Optionally, the second device modifies the lifecycle management phase of the radio service intent instance to the fulfilment phase, and fulfills the radio service intent instance, to obtain the intent execution result. The second device sends the intent execution result. It can be learned that, in this implementation, intent negotiation can be performed based on the foregoing lifecycle management phases, to avoid a problem of information inconsistency caused by repeatedly creating radio service intent instances with same intent information, to enable the radio service intent instance to be successfully fulfilled.

In an optional implementation, in addition to the lifecycle management phase indicated by the first indication information received by the second device being or including the feasibility check phase, the second device further receives evaluation constraint information, where the evaluation constraint information includes indication information indicating a simulation technology, and/or indication information indicating to perform online simulation or offline simulation. For example, if the simulation technology indicated by the evaluation constraint information is an NDT, the feasibility check result is obtained by performing simulation evaluation by using the NDT technology. In addition, if the evaluation constraint information indicates to perform online simulation, the feasibility check result is obtained through online simulation evaluation; or if the evaluation constraint information indicates to perform offline simulation, the feasibility check result is obtained through offline simulation evaluation.

Optionally, the evaluation constraint information may be included in the first request that carries the first indication information.

According to a fifth aspect, this application further provides an intent handling method for a radio energy saving intent instance. The method may be applied to an intent monitoring system, or a device or an apparatus in which the intent monitoring system is deployed. For ease of description, a first device is used as an example for description. In the method, the first device sends first indication information, where the first indication information indicates a lifecycle management phase of a radio energy saving intent instance. The lifecycle management phase includes at least one of a probe phase or a fulfilment phase of the radio energy saving intent instance. Correspondingly, the first device receives an intent management result obtained for the radio energy saving intent instance in the lifecycle management phase.

It can be learned that, in the method, the intent lifecycle management phase is introduced to indicate at least one of the probe phase or the fulfilment phase that the radio energy saving intent instance can be used in. In this way, in this application, immediate fulfilment of the intent instance after being created can be avoided, and this helps an intent execution system perform, after the first indication information indicates the corresponding lifecycle management phase, handling on the intent instance based on network deployment and a network status. Specifically, this application can achieve at least one of the following beneficial effects: a capability value of the radio energy saving intent instance is obtained in the probe phase before fulfilment of the radio energy saving intent instance, to facilitate selection of a target value expected by the intent, and avoid a problem that an expectation of the radio energy saving intent instance cannot be met due to a plurality of times of blind setting or a problem that better network performance cannot be obtained due to setting an excessively low target value; or the radio energy saving intent instance is fulfilled when the first device indicates to fulfill the radio energy saving intent instance in the fulfilment phase, to avoid a problem that the foregoing phases of intent negotiation cannot be performed because the created radio energy saving intent instance is directly fulfilled.

In an optional implementation, that the first device sends the first indication information includes: The first device sends a first request, where the first request is used to request to create the radio energy saving intent instance, the first request includes intent information and the first indication information, and the intent information includes an intent object and an intent target that are of the radio energy saving intent instance. The intent object includes geographical coverage area information of a network device or a cell, and the intent target includes an energy consumption target and a rate target. Optionally, the first request is used to request to create the intent instance. The radio energy saving intent instance is used to describe an expected status of a managed object. The intent object is information about the managed object. The intent target is a performance indicator of the managed object. It can be learned that, in this implementation, the radio energy saving intent instance is created based on the lifecycle management phase indicated by the first indication information, to avoid a problem such as information inconsistency caused by a case in which a plurality of radio energy saving intent instances need to be maintained for same intent information.

In an optional implementation, the lifecycle management phase indicated by the first indication information is the probe phase, the intent management result obtained for the radio energy saving intent instance in and the lifecycle management phase is an intent probe result obtained for the radio energy saving intent instance in the probe phase, where each intent probe result includes a capability value of the intent target of the radio energy saving intent instance. It can be learned that, in this implementation, the capability value of the intent target is obtained before fulfilment of the radio energy saving intent instance, to avoid a case in which the intent target cannot be achieved due to blind setting of a target value, or a case in which a better energy consumption effect and a better performance effect of a network cannot be obtained due to setting an excessively low target value.

Optionally, receiving, by the first device, the intent probe result includes: receiving, by the first device, an intent probe report, where the intent probe report includes at least one intent probe result. In addition, the intent probe report further includes an identifier of the radio energy saving intent instance. Each intent probe result includes a name of an intent target (for example, an energy consumption target and a rate target) and a capability value (for example, a current capability value and a capability value at a prediction time point or within prediction duration) of the corresponding intent target.

Optionally, after receiving the intent probe result, the first device further determines a target value (for example, an energy consumption target value and a downlink rate target value) of the intent target based on the intent probe result obtained for the radio energy saving intent instance in the probe phase, and sends the target value of the intent target. It can be learned that, in this implementation, the target value is determined based on the capability value of the currently probed intent target, to avoid a case in which the intent target cannot be achieved due to blind setting of a target value, or a case in which a network capability cannot be fully stimulated due to setting an excessively low target value.

Optionally, if the intent probe report includes at least two intent probe results, the first device may select a capability value included in one of the intent probe results as the target value of the intent target.

In an optional implementation, if the lifecycle management phase indicated by the first indication information is the fulfilment phase, the intent management result received by the first device is an intent execution result obtained for the radio energy saving intent instance in the fulfilment phase. It can be learned that, in this implementation, the first device indicates, by using the first indication information, to fulfill the radio energy saving intent instance, to avoid immediate fulfilment of the radio energy saving intent instance after being created.

In another optional implementation, the lifecycle management phase indicated by the first indication information is the probe phase. After sending the first indication information and receiving the corresponding intent management result, the first device further sends second indication information, where the second indication information indicates to modify the lifecycle management phase of the intent instance to the fulfilment phase; and receives an intent execution result obtained for the intent instance in the fulfilment phase. It can be learned that, in this implementation, intent negotiation can be performed based on the foregoing probe phase, to avoid a problem of information inconsistency caused by repeatedly creating radio energy saving intent instances with same intent information, and enable the radio energy saving intent instance to be successfully fulfilled.

In another optional implementation, in addition to the lifecycle management phase indicated by the first indication information by the first device being or including the probe phase, the first device also sends the foregoing evaluation constraint information. For example, if the simulation technology indicated by the evaluation constraint information is an NDT, the intent probe result is obtained by performing simulation evaluation by using the NDT technology. In addition, if the evaluation constraint information indicates to perform online simulation, the intent probe result is obtained through online simulation evaluation; or if the evaluation constraint information indicates to perform offline simulation, the intent probe result is obtained through offline simulation evaluation.

According to a sixth aspect, this application further provides an intent handling method for a radio energy saving intent instance. The method may be applied to an intent execution system, or a device or an apparatus in which the intent execution system is deployed. For ease of description, a second device is used as an example for description. In the method, the second device receives first indication information, where the first indication information indicates a lifecycle management phase of a radio energy saving intent instance. The lifecycle management phase includes at least one of a probe phase or a fulfilment phase of the radio energy saving intent instance. The second device sends an intent management result obtained for the radio energy saving intent instance in the lifecycle management phase.

Optionally, the second device further manages the radio energy saving intent instance based on the lifecycle management phase indicated by the first indication information, to obtain the intent management result.

It can be learned that, in the method, the intent lifecycle management phase is introduced to indicate at least one of the probe phase or the fulfilment phase that the radio energy saving intent instance can be used in. In this way, in this application, immediate fulfilment of the intent instance after being created can be avoided, and this helps handle the intent instance in the probe phase or the fulfilment phase based on network deployment and a network status. Specifically, this application can achieve at least one of the following beneficial effects: a capability value of the intent instance is obtained in the probe phase before fulfilment of the intent instance, to facilitate selection of a target value expected by the intent, and avoid a problem that an expectation of the intent instance cannot be met due to a plurality of times of blind setting or a problem that better network performance cannot be obtained due to setting an excessively low target value; or the intent instance is fulfilled when the first indication information indicates to fulfill the intent instance in the fulfilment phase, to avoid a problem that the foregoing phases of intent negotiation cannot be performed because the created intent instance is directly fulfilled.

In an optional implementation, that the second device receives the first indication information includes: The second device receives a first request, where the first request includes intent information and the first indication information, and the intent information includes an intent object and an intent target that are of the radio energy saving intent instance. The intent object includes geographical coverage area information of a network device or a cell, and the intent target includes an energy consumption target and a rate target. Correspondingly, the method further includes: The second device creates the radio energy saving intent instance based on the intent information, where the radio energy saving intent instance includes the intent object and the intent target that are expected, and further includes information about the lifecycle management phase indicated by the first indication information.

In an implementation, the lifecycle management phase indicated by the first indication information is the probe phase, the intent management result obtained for the radio energy saving intent instance in and the lifecycle management phase includes an intent probe result obtained for the radio energy saving intent instance in the probe phase, where each intent probe result includes a capability value of the intent target of the radio energy saving intent instance. It can be learned that, in this implementation, the capability value of the intent target may be probed before fulfilment of the radio energy saving intent instance, to avoid a case in which the intent target cannot be achieved due to blind setting of a target value, or a case in which a better energy consumption effect and a better performance effect of a network cannot be obtained due to setting an excessively low target value.

Optionally, sending, by the second device, the intent probe result includes: sending, by the second device, an intent probe report, where the intent probe report includes at least one intent probe result. In addition, the intent probe report further includes an identifier of the radio energy saving intent instance. Each intent probe result includes a name of an intent target (for example, an energy consumption target and a rate target) and a capability value (for example, a current capability value and a capability value at a prediction time point or within prediction duration) of the corresponding intent target. Correspondingly, the second device performs intent target probe evaluation on the radio energy saving intent instance, to obtain the intent probe result or the intent probe report.

In an optional implementation, after sending the intent probe report or the intent probe result to the first device, the second device further receives a target value of the intent target from the first device, where the target value of the intent target is determined by the first device based on the capability value of the intent target. It can be learned that, in this implementation, the target value is determined by the first device based on the capability value of the currently probed intent target, to avoid a case in which the intent target cannot be achieved due to blind setting of a target value, or a case in which a network capability cannot be fully stimulated due to setting an excessively low target value.

In an optional implementation, if the lifecycle management phase indicated by the first indication information is the fulfilment phase, the intent management result sent by the second device is an intent execution result obtained for the radio energy saving intent instance in the fulfilment phase. Optionally, the second device fulfills the radio energy saving intent instance to obtain the intent execution result. It can be learned that, in this implementation, the first indication information indicates to fulfill the radio energy saving intent instance, to avoid immediate fulfilment of the radio energy saving intent instance after being created.

In another optional implementation, the lifecycle management phase indicated by the first indication information is the probe phase. After receiving the first indication information and sending the corresponding intent management result, the second device further receives second indication information, where the second indication information indicates to modify the lifecycle management phase of the radio energy saving intent instance to the fulfilment phase. Optionally, the second device modifies the lifecycle management phase of the radio energy saving intent instance to the fulfilment phase, and fulfills the radio energy saving intent instance, to obtain the intent execution result. The second device sends the intent execution result. It can be learned that, in this implementation, intent negotiation can be performed based on the foregoing probe phase, to avoid a problem of information inconsistency caused by repeatedly creating radio energy saving intent instances with same intent information, to enable the radio energy saving intent instance to be successfully fulfilled.

In an optional implementation, in addition to the lifecycle management phase indicated by the first indication information received by the second device being or including the probe phase, the second device also receives the foregoing evaluation constraint information. For example, if the simulation technology indicated by the evaluation constraint information is an NDT, the intent probe result is obtained by performing simulation evaluation by using the NDT technology. In addition, if the evaluation constraint information indicates to perform online simulation, the intent probe result is obtained through online simulation evaluation; or if the evaluation constraint information indicates to perform offline simulation, the intent probe result is obtained through offline simulation evaluation.

Optionally, the evaluation constraint information may be included in the first request that carries the first indication information.

According to a seventh aspect, an embodiment of this application further provides a communication apparatus. The communication apparatus is a first device, an apparatus of the first device, or an apparatus that can be used together with the first device. In a possible implementation, the communication apparatus includes a functional module, and the functional module may be implemented by a hardware circuit, software, or a combination of a hardware circuit and software.

In a possible implementation, the communication apparatus includes one or more functional units, for example, a communication unit. The communication unit is configured to send first indication information, where the first indication information indicates a lifecycle management phase of an intent instance. The lifecycle management phase includes at least one of a feasibility check phase, a resource reservation phase, a probe phase, or a fulfilment phase of the intent instance. Correspondingly, the communication unit is further configured to receive an intent management result obtained for the intent instance in the lifecycle management phase. Optionally, the communication apparatus may further include a processing unit, configured to determine the first indication information. Optionally, for an optional implementation that may be further performed by the communication apparatus, refer to the first aspect and one or more of the possible implementations of the first aspect. Details are not described herein again.

In another possible implementation, the communication apparatus includes one or more functional units, for example, a communication unit. The communication unit is configured to send first indication information, where the first indication information indicates a lifecycle management phase of a radio service intent instance. The lifecycle management phase includes at least one of a feasibility check phase, a resource reservation phase, or a fulfilment phase of the radio service intent instance. Correspondingly, the communication unit is further configured to receive an intent management result obtained for the radio service intent instance in the lifecycle management phase. Optionally, the communication apparatus may further include a processing unit, configured to determine the first indication information. Optionally, for an optional implementation that may be further performed by the communication apparatus, refer to the third aspect and one or more of the possible implementations of the third aspect. Details are not described herein again.

In still another possible implementation, the communication apparatus includes one or more functional units, for example, a communication unit. The communication unit is configured to send first indication information, where the first indication information indicates a lifecycle management phase of a radio energy saving intent instance. The lifecycle management phase includes at least one of a probe phase or a fulfilment phase of the radio energy saving intent instance. Correspondingly, the communication unit is further configured to receive an intent management result obtained for the radio energy saving intent instance in the lifecycle management phase. Optionally, the communication apparatus may further include a processing unit, configured to determine the first indication information. Optionally, for an optional implementation that may be further performed by the communication apparatus, refer to the fifth aspect and one or more of the possible implementations of the fifth aspect. Details are not described herein again.

According to an eighth aspect, an embodiment of this application further provides a communication apparatus. The communication apparatus is a second device, an apparatus of the second device, or an apparatus that can be used together with the second device. In a possible implementation, the communication apparatus includes a functional module, and the functional module may be implemented by a hardware circuit, software, or a combination of a hardware circuit and software.

In a possible implementation, the communication apparatus includes one or more functional units, for example, a communication unit. The communication unit is configured to receive first indication information, where the first indication information indicates a lifecycle management phase of an intent instance. The lifecycle management phase includes at least one of a feasibility check phase, a resource reservation phase, a probe phase, or a fulfilment phase of the intent instance. The communication unit is further configured to send an intent management result obtained for the intent instance in the lifecycle management phase. Optionally, the communication apparatus may further include a processing unit, configured to manage the intent instance based on the lifecycle management phase indicated by the first indication information, to obtain the intent management result. Optionally, for an optional implementation that may be further performed by the communication apparatus, refer to the second aspect and one or more of the possible implementations of the second aspect. Details are not described herein again.

In another possible implementation, the communication apparatus includes one or more functional units, for example, a communication unit. The communication unit is configured to receive first indication information, where the first indication information indicates a lifecycle management phase of a radio service intent instance. The lifecycle management phase includes at least one of a feasibility check phase, a resource reservation phase, or a fulfilment phase of the radio service intent instance. The communication unit is further configured to send an intent management result obtained for the radio service intent instance in the lifecycle management phase. Optionally, the communication apparatus may further include a processing unit, configured to manage the radio service intent instance based on the lifecycle management phase indicated by the first indication information, to obtain the intent management result. Optionally, for an optional implementation that may be further performed by the communication apparatus, refer to the fourth aspect and one or more of the possible implementations of the fourth aspect. Details are not described herein again.

In a possible implementation, the communication apparatus includes one or more functional units, for example, a communication unit. The communication unit is configured to receive first indication information, where the first indication information indicates a lifecycle management phase of a radio energy saving intent instance. The lifecycle management phase includes at least one of a probe phase or a fulfilment phase of the radio energy saving intent instance. The communication unit is further configured to send an intent management result obtained for the radio energy saving intent instance in the lifecycle management phase. Optionally, the communication apparatus may further include a processing unit, configured to manage the radio energy saving intent instance based on the lifecycle management phase indicated by the first indication information, to obtain the intent management result. Optionally, for an optional implementation that may be further performed by the communication apparatus, refer to the sixth aspect and one or more of the possible implementations of the sixth aspect. Details are not described herein again.

In the seventh aspect and the eighth aspect, in an example, the processing unit may be the processing unit may alternatively be implemented as a processing circuit or a logic circuit. A transceiver unit may be an input/output interface, an interface circuit, an output circuit, an input circuit, a pin, a related circuit, or the like on a chip or a chip system.

In an implementation process, a processor may be configured to perform, for example, but not limited to, baseband-related processing; and a transceiver or a communication interface may be configured to perform, for example, but not limited to, radio frequency receiving and sending. The foregoing devices may be separately disposed on chips that are independent of each other, or at least some or all of the devices may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more devices may be integrated on a same chip. For example, the digital baseband processor and a plurality of application processors (for example, but not limited to, a graphics processing unit and a multimedia processor) may be integrated on a same chip. The chip may be referred to as a system on a chip (System on a Chip, SoC). Whether the devices are independently disposed on different chips or integrated and disposed on one or more chips usually depends on a requirement for a product design. Implementation forms of the foregoing devices are not limited in embodiments of this application.

According to a ninth aspect, an embodiment of this application further provides a processor, configured to perform the method according to any one of the first aspect, the third aspect, or the fifth aspect or the possible implementations of the first aspect, the third aspect, or the fifth aspect, or configured to perform the method according to any one of the second aspect, the fourth aspect, or the sixth aspect or the possible implementations of the second aspect, the fourth aspect, or the sixth aspect. In processes of performing these methods, a process of sending a signal and a process of receiving a signal in the foregoing methods may be understood as a process of outputting the signal by the processor and a process of inputting the signal by the processor. When outputting the signal, the processor outputs the signal to a transceiver, so that the transceiver (or a communication interface) transmits the signal. After the signal is output by the processor, other processing may further need to be performed on the signal before the signal reaches the transceiver (or the communication interface). Similarly, when the processor receives the input signal, the transceiver (or the communication interface) receives the signal, and inputs the signal into the processor. Further, after the transceiver (or the communication interface) receives the signal, other processing may further need to be performed on the signal before the signal is input into the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations of sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a tenth aspect, an embodiment of this application further provides a communication apparatus, including: a processor, configured to invoke a computer program stored in a memory, to cause the communication apparatus to implement the method according to any one of the first aspect to the sixth aspect or the possible implementations of the first aspect to the sixth aspect. Optionally, the communication apparatus further includes the memory, and the processor is coupled to the memory. Optionally, the communication apparatus may be a chip or a chip system.

According to an eleventh aspect, this application further provides a chip, where the chip includes a processor, and the processor is configured to determine first indication information, where the first indication information indicates a lifecycle management phase of an intent instance. The lifecycle management phase includes at least one of a feasibility check phase, a resource reservation phase, a probe phase, or a fulfilment phase of the intent instance. Optionally, the chip further includes a transceiver interface, where the transceiver interface is coupled to the processor, and the transceiver interface is configured to send the first indication information. Optionally, the chip is further configured to implement, through a processor or through a processor and a transceiver interface, the method according to any one of the first aspect, the third aspect, or the fifth aspect or the possible implementations of the first aspect, the third aspect, or the fifth aspect. Details are not described herein.

According to a twelfth aspect, this application further provides a chip, where the chip includes a processor, and the processor is configured to manage an intent instance based on a lifecycle management phase indicated by first indication information, to obtain an intent management result of the intent instance in each lifecycle management phase. Optionally, the chip further includes a transceiver interface, and the transceiver interface is configured to receive the first indication information and send the obtained intent management result. Optionally, the chip is further configured to implement, through a processor or through a processor and a transceiver interface, the method according to any one of the second aspect, the fourth aspect, or the sixth aspect or the possible implementations of the second aspect, the fourth aspect, or the sixth aspect. Details are not described herein.

According to a thirteenth aspect, this application further provides a communication system. The system includes at least one first device that performs the method according to any one of the first aspect or the optional implementations of the first aspect and at least one second device that performs the method according to any one of the second aspect or the possible implementations of the second aspect. Alternatively, the system includes at least one first device that performs the method according to any one of the third aspect or the optional implementations of the third aspect and at least one second device that performs the method according to any one of the fourth aspect or the possible implementations of the fourth aspect. Alternatively, the system includes at least one first device that performs the method according to any one of the fifth aspect or the optional implementations of the fifth aspect and at least one second device that performs the method according to any one of the sixth aspect or the possible implementations of the sixth aspect. In another possible design, the system may further include another device that interacts with the first device and/or the second device.

According to a fourteenth aspect, this application provides a computer-readable storage medium. The computer-readable storage medium stores a computer program. When the computer program runs, the method according to any one of the first aspect to the sixth aspect or the possible implementations of the first aspect to the sixth aspect is performed.

According to a fifteenth aspect, this application further provides a computer program product including instructions. The computer program product includes computer program code. When the computer program code runs, the method according to any one of the first aspect to the sixth aspect or the possible implementations of the first aspect to the sixth aspect is performed.

According to a sixteenth aspect, this application provides a chip system. The chip system includes a processor and an interface. The interface is configured to obtain a program or instructions, and the processor is configured to invoke the program or the instructions to implement the method according to any one of the first aspect to the sixth aspect or the possible implementations of the first aspect to the sixth aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of an intent management logical framework;
FIG. 2 is a diagram of a structure of an autonomous network system to which this application is applied;
FIG. 3 is a schematic flowchart of an intent handling method;
FIG. 4 is a schematic flowchart of an intent handling method according to an embodiment of this application;
FIG. 5 is a schematic flowchart of another intent handling method according to an embodiment of this application;
FIG. 6 is a schematic flowchart of still another intent handling method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

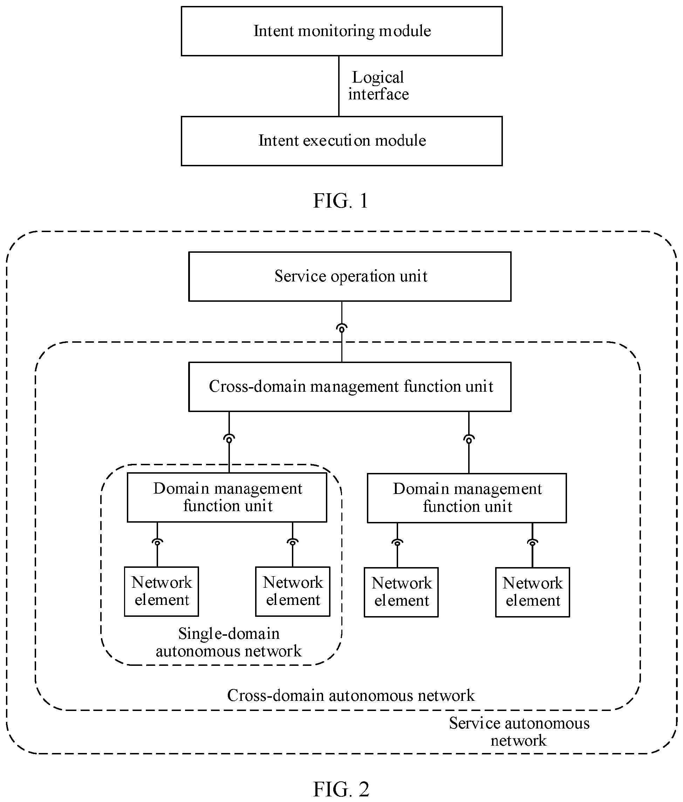

An intent-driven management system (intent-driven management system) is a system that uses intents to perform closed-loop automation management and control. The intent-driven management system can translate intents into policies and management tasks, which can be executed by the intent-driven management system to implement closed-loop automation. In an intent-driven management method, the intent-driven management system uses various kinds of closed-loop automation to satisfy intents. The intent-driven management system is also referred to as an intent handling function (intent handling function). FIG. 1 is a diagram of an intent management logical framework. As shown in FIG. 1, the intent management logical framework mainly relates to an intent monitoring module (or referred to as an intent monitoring system), an intent execution module (or referred to as an intent execution system), and a logical interface between the intent monitoring module and the intent execution module. The intent monitoring system is configured to determine intent information and an intent target that are of an intent instance, and monitor an execution status of the intent instance. The intent execution system is configured to perform intent translation, fulfilment, and evaluation on a received intent instance. The intent information includes an intent object and the intent target that are of the intent instance.

An intent (intent) is a group of expectations, including a requirement, an objective, a condition, and a constraint for a mobile communication network, but does not specifically describe how to fulfill these expectations. The intent is equal to an intent object (or referred to as a management object of the intent), for example, a capacity intent (for example, a high load proportion in an area 1 is 10%), a coverage intent (for example, a weak coverage proportion in the area 1 is 20%), and a rate intent (for example, a low-rate user proportion in the area 1 is 5%). The management object is used to describe information about a specific managed object or a specific management task in an intent-driven management system, where an information model of the management object may be used as an interaction parameter in a management interface, and creating the management object indicates creating management information in the management system, so that the management system can manage the managed object or perform the management task based on the management information. The intent may be considered as a management object in the management system. The intent instance is used to describe an expected status of a managed object. The intent object is information about the managed object. The intent target is a performance indicator of the managed object.

For example, the intent instance is a radio service intent instance, an intent object of the radio service intent instance includes geographical coverage area information of a network device or a cell, and an intent target of the radio service intent instance includes a delay target and/or a rate target. For another example, the intent instance is a radio energy saving intent instance, an intent object of the radio energy saving intent instance includes geographical coverage area information of a network device or a cell, and an intent target of the radio energy saving intent instance includes an energy consumption target and/or a rate target.

Optionally, a system architecture or a scenario to which an intent handling method provided in this application is applied is an autonomous network system. FIG. 2 is a diagram of a structure of an autonomous network system to which this application is applied. As shown in FIG. 2, the autonomous network system includes the following three cases: (1) a single-domain autonomous network, where the single-domain autonomous network includes network elements and a domain management function unit; (2) a cross-domain autonomous network, where the cross-domain autonomous network includes network elements, a domain management function unit, and a cross-domain management function unit; and (3) a service autonomous network, where the service autonomous network includes network elements, the domain management function unit, the cross-domain management function unit, and a service operation unit.

The service operation unit may also be referred to as a communication service management function (communication service management function) unit, and may provide functions and management services such as charging, settlement, accounting, a customer service, business, network monitoring, communication service lifecycle management, and service intent translation. The service operation unit includes an operating system of an operator or a vertical operational technology system (vertical operational technology system).

The cross-domain management function unit may also be referred to as a network management function (network management function, NMF) unit. The cross-domain management function unit provides one or more of the following functions or management services: network lifecycle management, network deployment, network fault management, network performance management, network configuration management, network assurance, a network optimization function, translation of a network intent from a communication service provider (intent from communication service provider, intent-CSP), translation of a network intent from a communication service consumer (intent from communication service consumer, intent-CSC), and the like. The network herein may include one or more network elements, subnetworks, or network slices. For example, the cross-domain management function unit may be a network slice management function (network slice management function, NSMF) unit, a management data analytics function (management data analytics function, MDAF) unit, a cross-domain self-organization network function (self-organization network function, SON-function) unit, or a cross-domain intent management function unit.

In some deployment scenarios, the cross-domain management function unit may further provide one or more of the following management functions or management services: subnetwork lifecycle management, subnetwork deployment, subnetwork fault management, subnetwork performance management, subnetwork configuration management, subnetwork assurance, a subnetwork optimization function, translation of a subnetwork intent from a communication service provider, translation of a subnetwork intent from a communication service consumer, and the like. The subnetwork may include a plurality of small subnetworks or a plurality of network slice subnetworks.

During implementation, the cross-domain management function unit may be implemented in a manner of one management platform and a plurality of management applications, where the management applications implement one or more of the foregoing network or subnetwork management functions.

The domain management function unit may also be referred to as a subnetwork management function (subnetwork management function, NMF) unit or a network element management function (network element/function management function) unit. The domain management function unit provides one or more of the following functions or management services: subnetwork or network element lifecycle management, subnetwork or network element deployment, subnetwork or network element fault management, subnetwork or network element performance management, subnetwork or network element assurance, subnetwork or network element optimization management, subnetwork or network element intent translation, and the like. The subnetwork herein includes one or more network elements. Alternatively, the subnetwork herein may include one or more subnetworks, that is, the one or more subnetworks form a subnetwork with a larger coverage area. Alternatively, the subnetwork herein may include one or more network slice subnetworks.

The subnetwork is described in one of the following manners: (1) a network in a technical domain, for example, a radio access network, a core network, or a transmission network; (2) a network of a standard, for example, a global system for mobile communications (global system for mobile communications, GSM) network, a long term evolution (Long Term Evolution, LTE) network, or a 5th generation mobile communication technology (5th generation mobile communication technology, 5G for short) network; (3) a network provided by a device vendor, for example, a network provided by a device vendor X; and (4) a network in a geographical area, for example, a network of a factory A or a network of a prefecture-level city B. During implementation, the domain management function unit may be implemented in a manner of one management platform and a plurality of management applications, where the management applications implement one of the foregoing subnetwork or network element management functions.

The network element is an entity that provides a network service, and includes a core network element, an access network element, and the like. For example, the core network element may include but is not limited to an access and mobility management function (access and mobility management function, AMF) entity, a session management function (session management function, SMF) entity, a policy control function (policy control function, PCF) entity, a network data analytics function (network data analytics function, NWDAF) entity, a network repository function (network repository function, NRF), a gateway, and the like. The access network element may include but is not limited to: various types of base stations (for example, a next generation NodeB (generation NodeB, gNB), an evolved NodeB (evolved NodeB, eNB), a central unit control panel (central unit control panel, CUCP), a central unit (central unit, CU), a distributed unit (distributed unit, DU), and a central unit user panel (central unit user panel, CUUP)).

In a service-oriented management architecture, focus is on a management service producer (Management Service Producer, MnS Producer) and a management service consumer (Management Service Consumer, MnS Consumer). It should be understood that, when a management service is a management service provided by the foregoing service operation unit, the service operation unit is a management service producer, and another service operator unit may be a management service consumer; when a management service is a management service provided by the foregoing cross-domain management function unit, the cross-domain management function unit is a management service producer, and the service operation unit is a management service consumer; when a management service is a management service provided by the domain management function unit, the domain management function unit is a management service producer, and the cross-domain management function unit or the service operation unit is a management service consumer; or when a management service is a management service provided by the network element, the network element is a management service producer, and the domain management function unit, the cross-domain management function unit, or the service operation unit is a management service consumer.

Optionally, application of an intent management system to the foregoing autonomous network system includes but is not limited to the following deployment scenarios: Deployment scenario #1: For an intent management capability of the single-domain autonomous network, an intent execution module is deployed in the domain management function unit, and an intent monitoring module is deployed in the cross-domain management function unit. Deployment scenario #2: For an intent management capability of the cross-domain autonomous network, an intent execution module is deployed in the cross-domain management function unit, and an intent monitoring module is deployed in the service operation unit. Deployment scenario #3: For an intent management capability of the service autonomous network, an intent execution module is deployed in the service operation unit, and an intent monitoring module is deployed in a third-party system outside the autonomous network, for example, an enterprise system. In the service-oriented management architecture, the intent monitoring module is a management service consumer, the intent execution module is a management service producer, the logical interface is an intent service-oriented interface, and the logical interface is an intent management service.

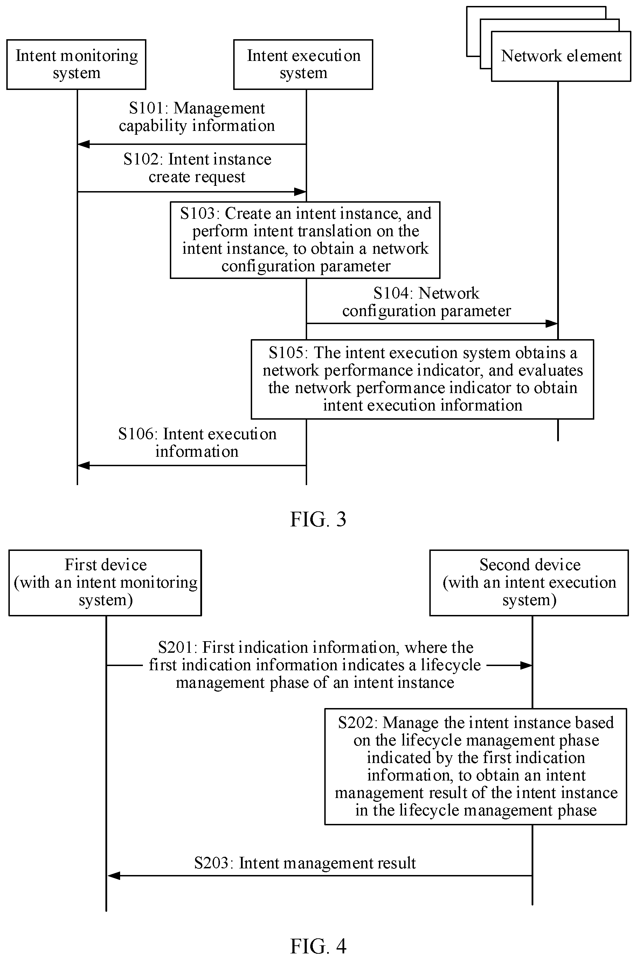

FIG. 3 is a schematic flowchart of an intent handling method. As shown in FIG. 3, the intent handling method includes but is not limited to the following steps.

S101: An intent execution system sends management capability information to an intent monitoring system, and correspondingly, the intent monitoring system receives the management capability information.

The management capability information includes intent objects (for example, a radio subnetwork and a radio slice service) supported by the intent execution system and target names (for example, a weak coverage proportion, a high load proportion, an uplink rate, a downlink rate, an average uplink or downlink rate, and an energy consumption target) of intent targets supported by the intent execution system.

S102: The intent monitoring system sends an intent instance create request to the intent execution system based on the management capability information of the intent execution system, and correspondingly, the intent execution system receives the intent instance create request.

The intent instance create request includes intent information, and the intent information includes an intent object and a target value of an intent target that are expected.

S103: The intent execution system creates an intent instance based on the intent instance create request, and performs intent translation on the intent instance, to obtain a network configuration parameter.

S104: The intent execution system delivers the network configuration parameter to a corresponding network element.

The network element performs configuration based on the network configuration parameter, to execute the intent instance. Optionally, the intent handling method may further include steps S105 and S106.

S105: The intent execution system obtains a network performance indicator, and evaluates the network performance indicator to obtain intent execution information.

S106: The intent execution system sends the intent execution information to the intent monitoring system.

In this application, the intent execution information may also be referred to as an intent execution result.

It can be learned that in the intent handling method shown in FIG. 3, the intent monitoring system can obtain only the intent objects and the target names of the intent targets that are supported by the intent execution system, and the target value of the intent target is carried in the intent instance create request by the intent monitoring system. However, a capability of the intent execution system is determined by network deployment and a network status, and changes in real time. Therefore, in this case, how to perform intent handling is a problem to be resolved.

In this application, the intent execution system receives first indication information of the intent monitoring system, where the first indication information indicates a lifecycle management phase of an intent instance. The lifecycle management phase includes at least one of a feasibility check phase, a resource reservation phase, a probe phase, or a fulfilment phase of the intent instance. Further, the intent execution system sends, to the intent monitoring system, an intent management result obtained for the intent instance in the lifecycle management phase. For example, the sent intent management result includes at least one of the following: a feasibility check result obtained for the intent instance in the feasibility check phase, a resource reservation result obtained for the intent instance in the resource reservation phase, an intent probe result obtained for the intent instance in the probe phase, or an intent execution result obtained for the intent instance in the fulfilment phase.

It can be learned that, in this application, the intent lifecycle management phase is introduced to indicate at least one of the feasibility check phase, the resource reservation phase, the probe phase, or the fulfilment phase in which the intent instance can be used. In this way, in this application, immediate fulfilment of the intent instance after being created can be avoided, and this helps an intent execution system perform, after the first indication information indicates the corresponding lifecycle management phase, corresponding handling on the intent instance based on network deployment and a network status. In other words, according to the intent handling method (or referred to as an intent management method) provided in this application, an intent negotiation capability, for example, feasibility check, resource reservation, capability value probe, or fulfilment, is supported by using the intent lifecycle management phase. Lifecycle management in different phases is supported by using the first indication information, to support intent negotiation between the intent monitoring system and the intent execution system.

FIG. 4 is a schematic flowchart of an intent handling method according to an embodiment of this application. The intent handling method shown in FIG. 4 is described in a manner of interaction between a first device having an intent monitoring system and a second device having an intent execution system. As shown in FIG. 4, the intent handling method includes but is not limited to the following steps.

S201: The first device sends first indication information, and correspondingly, the second device receives the first indication information, where the first indication information indicates a lifecycle management phase of an intent instance.

The lifecycle management phase includes at least one of a feasibility check phase, a resource reservation phase, a probe phase, or a fulfilment phase of the intent instance.

Optionally, step S201 is: The first device sends a first request, and correspondingly, the second device receives the first request, where the first request includes intent information and first indication information, and the intent information includes an intent object and an intent target that are of an intent instance; and the second device creates the intent instance based on the intent information. The intent instance includes the expected intent object and a lifecycle management phase indicated by the first indication information. Optionally, the second device further sends a first response to the first device, where the first response includes an identifier of the intent instance. It can be learned that, in this implementation, the intent instance is created based on the lifecycle management phase indicated by the first indication information, to avoid a problem such as inconsistency of information, for example, a value of the intent object or a value of the intent target, that is caused by a case in which a plurality of intent instances need to be maintained for same intent information. For example, if the intent object in the intent information is geographical coverage area information, and the intent target is an uplink delay and an uplink rate, values of geographical coverage areas in the plurality of intent instances maintained for the same intent information may be different.

The identifier of the intent instance may be a distinguish name (distinguish name, DN) of a managed object instance. Optionally, the identifier of the intent instance may be carried in the first request, or may be allocated by the second device to the managed object instance when the second device creates the intent instance.

S202: The second device manages the intent instance based on the lifecycle management phase indicated by the first indication information, to obtain an intent management result of the intent instance in the lifecycle management phase.

The intent management result is also referred to as an intent report. The intent report is intent result information fed back by an intent-driven management system to a user, and may include, for example, at least one of an intent execution result, an intent feasibility check report, an intent probe report, a resource reservation report, or the like in this application.

S203: The second device sends the intent management result obtained for the intent instance in the lifecycle management phase, and correspondingly, the first device receives the intent management result of the intent instance.

In an optional implementation, the lifecycle management phase indicated by the first indication information is the feasibility check phase, and the second device sends, to the first device, a feasibility check result obtained for the intent instance in the feasibility check phase. Optionally, step S202 may be specifically: The second device performs feasibility check on the intent instance, to obtain the feasibility check result.

Optionally, the second device sends the feasibility check result to the first device in a form of a feasibility check report. Optionally, in addition to the feasibility check result (for example, fulfilment of the intent instance is feasible or infeasible), the feasibility check report further includes the identifier of the intent instance and a reason for infeasibility (if the intent instance is infeasible, the reason for infeasibility is further included, for example, an intent conflict or insufficient resources).

Optionally, the second device further receives evaluation constraint information from the first device, where the evaluation constraint information includes indication information indicating a simulation technology, and/or indication information indicating to perform online simulation or offline simulation. In this way, the second device determines a specific simulation technology based on the evaluation constraint information. For example, if the simulation technology indicated by the evaluation constraint information is a network digital twin (network digital twin, NDT), the second device performs simulation evaluation by using the NDT technology, to obtain the feasibility check result. In addition, if the evaluation constraint information indicates to perform online simulation, simulation evaluation is performed online; or if the evaluation constraint information indicates to perform offline simulation, simulation evaluation is performed offline. Optionally, the first request may include the evaluation constraint information.

Optionally, the intent instance created by the second device includes the intent information of the intent instance, the first indication information, and the evaluation constraint information.

In another optional implementation, the lifecycle management phase indicated by the first indication information is the resource reservation phase, and in step S203, the second device sends, to the first device, a resource reservation result obtained for the intent instance in the resource reservation phase. Optionally, step S202 may be specifically: The second device reserves a corresponding resource for the intent instance, to obtain the resource reservation result. Optionally, the second device sends the resource reservation result to the first device in a form of a resource reservation report. Optionally, the corresponding resource reserved by the second device for the intent instance is at least one of a radio PRB resource, a quantity of RRC connections, or a DRB resource. The resource reservation result may also be referred to as a resource reservation status (for example, reserved or reservation failure). The resource reservation report may further include a network device and/or a cell associated with a reserved resource, and a quantity or a proportion of reserved resources. The proportion is a proportion of the quantity of reserved resources to a total quantity of resources of the network device and/or the cell.

In an optional implementation, the lifecycle management phase indicated by the first indication information includes the feasibility check phase and the resource reservation phase. In this case, the second device not only sends, to the second device, the feasibility check result obtained for the intent instance in the feasibility check phase, but also sends, to the second device, the resource reservation result obtained for the intent instance in the resource reservation phase. Correspondingly, step S202 is specifically: The second device performs feasibility check on the intent instance to obtain the feasibility check result, and the second device reserves a corresponding resource for the intent instance to obtain the resource reservation result. Optionally, in step S203, the feasibility check result and the resource reservation result may be separately sent to the first device, or may be sent to the first device together. This is not limited in this application.

In another optional implementation, the lifecycle management phase indicated by the first indication information in step S201 is the feasibility check phase. After step S201, the first device may further send a second request to the second device. The second request includes indication information of the resource reservation phase or the second request is used to request to modify the lifecycle management phase indicated by the first indication information to the resource reservation phase. For example, a value of the first indication information before the modification is a value of the feasibility check phase, and a value of the first indication information after the modification is a value of the resource reservation phase. In this way, the second device may determine and send the feasibility check result through steps S202 and S203, or may further determine and send the resource reservation result through steps S202 and S203. Optionally, the feasibility check result and the resource reservation result may be separately sent to the first device, or may be sent to the first device together. Optionally, the second request is referred to as an intent instance modification request, to modify a value of the lifecycle phase of the intent instance.

In an optional implementation, the lifecycle management phase indicated by the first indication information is the probe phase; and step S202 is specifically: The second device probes the intent instance, to obtain an intent probe result. Correspondingly, step S203 is specifically: The second device sends the intent probe result to the first device. Each intent probe result includes a capability value of the intent target of the intent instance. It can be learned that, in this implementation, the capability value of the intent target is obtained before fulfilment of the intent instance, to avoid a case in which the intent target cannot be achieved due to blind setting of a target value, or a case in which a better energy consumption effect and a better performance effect of a network cannot be obtained due to setting an excessively low target value.

Optionally, determining, by the second device, the intent probe result includes: determining, by the second device, an intent probe report, where the intent probe report includes at least one intent probe result. In addition, the intent probe report further includes the identifier of the intent instance. Each intent probe result includes a name of an intent target (for example, an energy consumption target and a rate target) and a capability value (for example, a current capability value and a capability value at a prediction time point or within prediction duration) of the corresponding intent target.

Optionally, the method further includes: After receiving the intent probe result, the first device determines a target value (for example, an energy consumption target value and a downlink rate target value) of the intent target based on the intent probe result obtained for the intent instance in the probe phase, and sends the target value of the intent target to the second device. It can be learned that, in this implementation, the target value is determined based on the capability value of the currently probed intent target, to avoid a case in which the intent target cannot be achieved due to blind setting of a target value, or a case in which a network capability cannot be fully stimulated due to setting an excessively low target value. In the intent instance previously created by the second device, no value is set for the intent target and only a name of the intent target exists, or the capability value of the intent target in the created intent instance is 0. After the first device determines and sends the target value of the intent target to the second device based on the intent probe result, the capability value of the intent target in the intent instance is the target value.

Optionally, if the intent probe report includes at least two intent probe results, the first device may select a capability value included in one of the intent probe results as the target value of the intent target.

In an optional implementation, the lifecycle management phase indicated by the first indication information by the first device is the probe phase, and the first device further sends the foregoing evaluation constraint information. For example, if the simulation technology indicated by the evaluation constraint information is an NDT, the intent probe result is obtained by performing simulation evaluation by using the NDT technology. In addition, if the evaluation constraint information indicates to perform online simulation, the intent probe result is obtained through online simulation evaluation; or if the evaluation constraint information indicates to perform offline simulation, the intent probe result is obtained through offline simulation evaluation.

In an optional implementation, the lifecycle management phase indicated by the first indication information is the fulfilment phase, and step S202 is specifically: The second device fulfills the intent instance, to obtain an intent execution result. Correspondingly, step S203 is specifically: The second device sends the intent execution result to the first device. Optionally, the second device sends the intent execution result to the first device in a form of an intent fulfilment report. The intent execution result includes whether the intent target of the intent instance is satisfied, for example, whether each intent target is satisfied. Optionally, in addition to the intent execution result, the intent fulfilment report may further include a current measurement value of the intent target.

Optionally, that the second device fulfills the intent instance, to obtain the intent execution result includes: The second device performs intent translation on the intent instance, to obtain a network configuration parameter; the second device configures and activates the network configuration parameter, and obtains a network performance indicator after the intent instance is fulfilled; and the second device generates the intent fulfilment report based on the network performance indicator, where the intent fulfilment report includes whether the intent target of the intent instance is satisfied and the current measurement value of the intent target.

It can be learned that, in this implementation, the first device indicates, by using the first indication information, to fulfill the intent instance, to avoid immediate fulfilment of the intent instance after being created.

In another optional implementation, the lifecycle management phase indicated by the first indication information is at least one of the feasibility check phase, the resource reservation phase, or the probe phase. After sending the first indication information and receiving the corresponding intent management result, the first device further sends second indication information, where the second indication information indicates to modify the lifecycle management phase of the intent instance to the fulfilment phase. Further, the method further includes: The second device modifies the lifecycle management phase of the intent instance to the fulfilment phase. Correspondingly, step S202 further includes: The second device fulfills the intent instance to obtain the intent execution result. Step S203 further includes: The second device sends the intent execution result to the first device. It can be learned that, in this implementation, intent negotiation can be performed based on the foregoing lifecycle management phases, to avoid a problem of information inconsistency caused by repeatedly creating intent instances with same intent information, and enable the intent instance to be successfully fulfilled.

As described above, the lifecycle phase indicated by the first indication information in step S201 includes at least one of the feasibility check phase, the resource reservation phase, the probe result, or the fulfilment phase. In step S202, the second device manages the intent instance based on the corresponding lifecycle management phase, to obtain the corresponding intent management phase. Further, in step S203, the second device sends the corresponding intent management phase. As described above, the intent management results may be sent separately or together. In addition, the first device may further modify the lifecycle management phase of the intent instance via a request message.

It can be learned that in the intent handling method in FIG. 4, the intent lifecycle management phase is introduced to indicate at least one of the feasibility check phase, the resource reservation phase, the probe phase, or the fulfilment phase in which the intent instance can be used. In this way, this application can achieve at least one of the following beneficial effects: feasibility check can be performed on the intent instance before fulfilment of the intent, and the intent instance is fulfilled when an expectation of the intent instance is met; resource reservation is performed before fulfilment of the intent instance, to ensure that sufficient resources are available to meet an expectation of the intent instance during intent fulfilment; a capability value of the intent instance is obtained in the probe phase before fulfilment of the intent instance, to facilitate selection of a target value expected by the intent, and avoid a problem that an expectation of the intent instance cannot be met due to a plurality of times of blind setting or a problem that better network performance cannot be obtained due to setting an excessively low target value; or the intent instance is fulfilled when the first device indicates to fulfill the intent instance in the fulfilment phase, to avoid a problem that the foregoing phases of intent negotiation cannot be performed because the created intent instance is directly fulfilled.

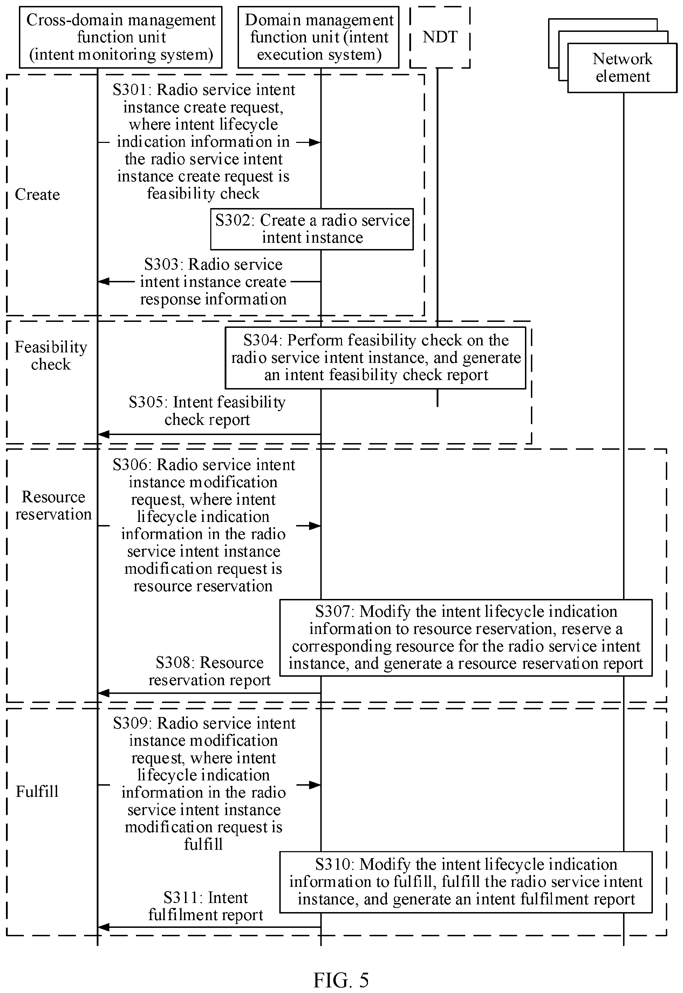

FIG. 5 is a schematic flowchart of another intent handling method according to an embodiment of this application. In the intent handling method in FIG. 5, a radio service intent instance is used as an example to describe three lifecycle management phases: a feasibility check phase, a resource reservation phase, and a fulfilment (or referred to as fulfilment (fulfill)) phase. In addition, in the intent handling method, an example in which an intent monitoring system or an intent monitoring module is the cross-domain management function unit in FIG. 2 and an intent execution system or an intent execution module is the domain management function unit in FIG. 2 is used for description. In addition, an example is used in which a first request is a radio service intent instance create request, first indication information is intent lifecycle indication information, and a second request is a radio service intent instance modification request. As shown in FIG. 5, the intent handling method includes but is not limited to the following steps.

S301: The cross-domain management function unit sends the radio service intent (radio service intent) instance create request to the domain management function unit, and correspondingly, the domain management function unit receives the radio service intent instance create request.

The radio service intent instance create request carries intent information (or referred to as radio service expectation information) of the radio service intent instance and intent lifecycle indication information. The intent information includes information about an expected intent object (for example, an object type: a radio service (radio service), and an object name: geographical coverage area information) and information about an expected intent target (for example, the intent target includes a delay target and a rate target, where an uplink is used as an example, and the information about the expected intent target is: an uplink delay target: <10 ms; and an uplink rate target: >500 Mbps). The intent lifecycle indication information is feasibility check (feasibility check). To be specific, a value of the intent lifecycle indication information (or referred to as an intent execution purpose (intent execution purpose)) is feasibility check (intent execution purpose=feasibility check), indicating the intent execution system (namely, the domain management function unit) to perform feasibility check on the radio service intent instance. The domain management function unit may perform feasibility check on the intent information of the radio service intent instance.

Optionally, the radio service intent instance create request is also referred to as a radio service intent create request (request to create radio service intent), and carries the intent execution purpose=feasibility check.

Optionally, the radio service intent instance create request further carries simulation constraint information, where the simulation constraint information includes at least one of the following: online (online) or offline (offline) indication information, indicating to perform simulation evaluation on the radio service intent instance in an online or offline manner; or indication information indicating a technology that may be used for simulation (or referred to as a simulation technology). For example, the technology that may be used for simulation includes an NDT. Optionally, as shown in FIG. 5, the NDT is integrated into the domain management function unit as a simulation module.

S302: The domain management function unit creates the radio service intent instance (namely, a radio service intent management object instance) based on the radio service intent instance create request.

The radio service intent instance includes the intent information of the radio service intent instance, the intent lifecycle indication information, and the evaluation constraint information.

S303: The domain management function unit sends radio service intent instance create response information to the cross-domain management function unit, and correspondingly, the cross-domain management function unit receives the radio service intent instance create response information.

The radio service intent instance create response information is also referred to as a radio service intent create response (response for creating radio service intent). The radio service intent instance create response information carries an identifier of the radio service intent instance. The identifier of the radio service intent instance may be a distinguish name (distinguish name, DN) of the radio service intent management object instance. Optionally, the identifier of the radio service intent instance may be carried in the radio service intent instance create request in step S301, or may be allocated by the domain management function unit when the radio service intent instance is created in step S302.

S304: The domain management function unit performs feasibility check on the radio service intent instance based on a value (namely, feasibility check) of the intent lifecycle indication information in the radio service intent instance, and generates an intent feasibility check report (namely, the feasibility check report described above).

Optionally, the domain management function unit further determines a specific simulation manner and means based on the simulation evaluation constraint information. For example, when the online or offline indication information indicates online, simulation is performed online; or when the simulation technology is the NDT, simulation evaluation is performed by using the network digital twin. After completing the simulation evaluation, the domain management function unit generates the intent feasibility check report. Optionally, the intent feasibility check report includes an intent feasibility check result (feasible or infeasible), and in a case of infeasibility, further includes a reason for infeasibility (for example, an intent conflict or insufficient resources).

S305: The domain management function unit sends the intent feasibility check report to the cross-domain management function unit, where the intent feasibility check report includes the identifier of the intent instance and the intent feasibility check result (and further includes the reason for infeasibility in the case of infeasibility).

Optionally, the intent feasibility check report (intent feasibility check report) may be carried in an intent report (intent report) for sending.

Optionally, when the cross-domain management function unit has a resource reservation requirement, and/or when the cross-domain management function unit receives the intent feasibility check report and learns that the radio service intent instance is feasible, step S306 may be further performed.

S306: The cross-domain management function unit sends the radio service intent instance modification request to the domain management function unit, and correspondingly, the domain management function unit receives the radio service intent instance modification request, where the radio service intent instance modification request carries the identifier of the radio service intent instance and intent lifecycle indication information: resource reservation (resource reservation).

Optionally, the radio service intent instance modification request is also referred to as a radio service intent modification request (request to modify radio service intent), and carries the intent execution purpose=resource reservation.

S307: The domain management function unit modifies the value of the intent lifecycle indication information in the radio service intent instance to resource reservation (before the modification, the value is feasibility check), reserves a corresponding resource for the radio service intent instance, and generates a resource reservation report.

As shown in FIG. 5, the domain management function unit reserves the corresponding resource for the radio service intent instance based on a resource of a network element (for example, a base station), and generates the resource reservation report.

Optionally, the resource reserved for the radio service intent instance is at least one of a radio PRB resource, a quantity of RRC connections, or a DRB resource. The resource reservation report includes a resource reservation status (for example, reserved or reservation failure), a network device and/or a cell associated with a reserved resource, and a quantity or a proportion of reserved resources. The proportion is a proportion of the quantity of reserved resources to a total quantity of resources of the network device and/or the cell.

S308: The domain management function unit sends the resource reservation report to the cross-domain management function unit, and correspondingly, the cross-domain management function unit receives the resource reservation report.

Optionally, the intent lifecycle indication information in step S301 may alternatively be feasibility check and resource reservation. In this case, step S306 is not needed, and step S305 and step S308 may be sent separately, or may be sent together.

S309: The cross-domain management function unit sends the radio service intent instance modification request to the domain management function unit, and correspondingly, the domain management function unit receives the radio service intent instance modification request, where the radio service intent instance modification request carries the identifier of the radio service intent instance and intent lifecycle indication information: fulfill or execute (Fulfill).

Optionally, the radio service intent instance modification request is also referred to as a request to configure the radio service intent for fulfilment (request to configure radio service intent for fulfilment), and carries the intent execution purpose=fulfill.

S310: The domain management function unit modifies the value of intent lifecycle indication information in the radio service intent instance to fulfill (before the modification, the value is feasibility check, resource reservation, or feasibility check and resource reservation), executes or fulfills the radio service intent instance, and generates an intent fulfilment report.

As shown in FIG. 5, the domain management function unit fulfills the radio service intent instance based on a resource of the network element (for example, a base station). Optionally, the intent fulfilment report (intent fulfilment report) may be carried in the intent report for sending. In an optional implementation, that the domain management function unit executes or fulfills the radio service intent instance, and generates the intent fulfilment report includes: The domain management function unit translates the radio service intent instance into a radio service configuration parameter, and configures and activates the radio service configuration parameter for the network element. After executing the radio service intent instance, the domain management function unit obtains a network performance indicator; and evaluates, based on the obtained network performance indicator, whether the intent target of the radio service intent instance is satisfied, and obtains a radio service intent fulfilment report. The radio service intent fulfilment report includes an intent execution result, a current performance measurement value of each intent target, and the like. The intent execution result includes whether an intent is satisfied and/or whether each intent target is satisfied. Herein, whether the intent is satisfied refers to evaluating, based on the obtained network performance indicator, whether all intent targets of the radio service intent instance are satisfied. If all the intent targets are satisfied, the intent is satisfied; otherwise, the intent is not satisfied. For example, the intent targets are respectively an uplink delay target <10 ms and an uplink rate target >500 Mbps. If it is evaluated, based on the network performance indicator, that both the uplink delay target and the uplink rate target are satisfied, the radio service intent instance is satisfied.

In another optional implementation, if the domain management function unit has reserved a resource for the radio service intent instance in step S307, in step S310, the domain management function unit needs to allocate the reserved resource to the radio service intent instance.

S311: The domain management function unit sends the intent fulfilment report to the cross-domain management function unit, and correspondingly, the cross-domain management function unit receives the intent fulfilment report.

It can be learned that, in the intent handling method shown in FIG. 5, before the radio service intent instance is fulfilled, the cross-domain management system may perform at least one of the following management on the radio service intent instance: a: feasibility check, to determine whether the intent information of the corresponding radio service intent instance can be satisfied; or b: resource reservation, where resource reservation is performed before fulfilment of the radio service intent, to ensure that sufficient resources are available to ensure radio service provisioning during fulfilment of the radio service intent. It can be learned that according to the method, different lifecycle management phases of the radio service intent instance can be supported for the same radio service intent instance, to avoid a problem such as possible information inconsistency caused by repeatedly creating the radio service intent instance, and ensure that the domain management system can learn of management of all the lifecycle phases of the radio service intent instance. The intent lifecycle indication information is introduced into the radio service intent instance, to indicate that the created radio service intent instance can be used for feasibility check, resource reservation, and/or fulfilment, to avoid immediate intent fulfilment of the created radio service intent instance. In addition, the feasibility check phase and the resource reservation phase of the radio service intent instance are used to ensure successfully provisioning of an expected radio service instance during fulfilment of the radio service intent instance, and a radio service provisioning capability can be obtained during fulfilment of the radio service intent instance, to guide sales of a corresponding radio service.

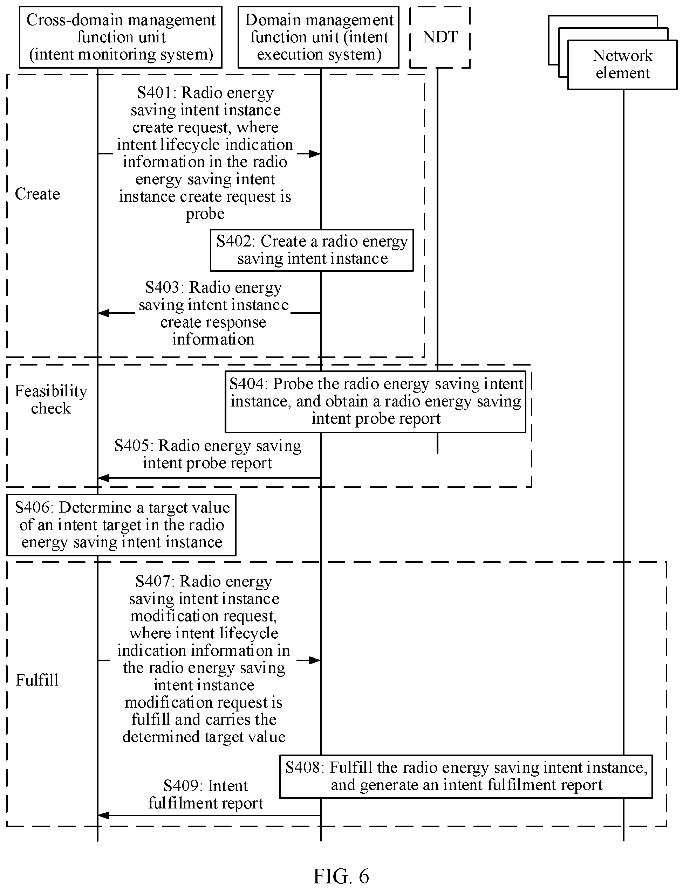

FIG. 6 is a schematic flowchart of still another intent handling method according to an embodiment of this application. In the intent handling method in FIG. 6, a radio energy saving intent (energy saving intent) of a radio access network (radio access network, RAN) is used as an embodiment. A target name of an intent target of a created radio energy saving intent instance includes energy consumption, an uplink rate, a downlink rate, and/or the like. Lifecycle management phases described herein include a probe (probe) phase and an execution (fulfill) phase (or referred to as a fulfilment phase). Optionally, the intent target may further include another target, for example, energy efficiency. In this embodiment of this application, the energy consumption and the downlink rate are used as examples. In addition, in the intent handling method, an example in which an intent monitoring system or an intent monitoring module is the cross-domain management function unit in FIG. 2 and an intent execution system or an intent execution module is the domain management function unit in FIG. 2 is used for description. In addition, an example is used in which a first request is a radio energy saving intent instance create request, first indication information is intent lifecycle indication information, and a second request is a radio energy saving intent instance modification request. As shown in FIG. 6, the intent handling method includes but is not limited to the following steps.

S401: The cross-domain management function unit sends a radio energy saving intent instance create request to the domain management function unit, and correspondingly, the domain management function unit receives the radio energy saving intent instance create request, where the radio energy saving intent instance create request carries intent information of the radio energy saving intent instance and intent lifecycle indication information: probe (probe).

The intent information of the radio energy saving intent instance includes information about an expected intent object (for example, an object type: a radio access network subnetwork (RAN subnetwork), and an object name: geographical coverage area information) and information about an expected intent target (including energy consumption and a downlink rate). A value of the intent lifecycle indication information (intent execution purpose) is probe (probe), indicating the intent execution system (namely, the domain management function unit) to perform probe evaluation on the intent target of the radio energy saving intent instance.

A main difference between the intent target of the intent instance in the intent handling method in FIG. 6 and the intent target of the intent instance in the intent handling method in FIG. 5 is that the intent target of the intent instance in the intent handling method in FIG. 6 has only the name but no target value. Alternatively, it may be considered that a target value of the intent target of the intent instance in the intent handling method in FIG. 6 is set to 0.

Optionally, the radio energy saving intent instance create request is also referred to as a radio access network energy saving intent create request (request to create RAN energy saving intent), and carries an intent target name (intent target name) and the intent execution purpose=probe.

Optionally, the radio energy saving intent instance create request further carries simulation constraint information, where the simulation constraint information includes at least one of the following: online (online) or offline (offline) indication information, indicating to probe a capability value of the intent target of the radio energy saving intent instance in an online or offline manner; or indication information indicating a technology that may be used for simulation (or referred to as a simulation technology). For example, the technology that may be used for probe includes an NDT. Optionally, as shown in FIG. 6, the NDT is integrated into the domain management function unit as a simulation module. A name of the simulation constraint information is not limited in this application, and may alternatively be evaluation constraint information, verification constraint information, simulation evaluation constraint information, or the like.

S402: The domain management function unit creates the radio energy saving intent instance (or referred to as a radio energy saving intent management object instance) based on the radio energy saving intent instance create request.

Optionally, the created radio energy saving intent instance includes the intent information of the radio energy saving intent instance and the intent lifecycle indication information, or includes the intent information of the radio energy saving intent instance, the intent lifecycle indication information, and the simulation constraint information. As described above, the intent target in the intent information includes only the name of a radio energy saving target (including an energy consumption target and a downlink rate target), and has no target value or a target value is set to 0.

S403: The domain management function unit sends radio energy saving intent instance create response information to the cross-domain management function unit, and correspondingly, the cross-domain management function unit receives the radio energy saving intent instance create response information.

The radio energy saving intent instance create response information carries an identifier of the radio energy saving intent instance. Optionally, the identifier of the radio energy saving intent instance may be a DN of the management object instance. Optionally, the identifier of the radio energy saving intent instance may be carried in the radio energy saving intent instance create request in step S401, or may be allocated by the domain management function unit to the radio energy saving intent instance when the radio energy saving intent instance is created in step S402.

Optionally, the radio energy saving intent instance create response information is also referred to as a radio access network energy saving intent create response (response for creating RAN energy saving intent), and carries the identifier of the intent instance.

S404: The domain management function unit performs probe (simulation prediction) on the radio energy saving intent instance based on the value (probe) of the intent lifecycle indication information in the radio energy saving intent instance, probes capability values of a supported energy consumption target and a supported downlink rate target, and obtains a radio energy saving intent probe report (intent probe report).

Optionally, performing simulation, by the domain management function unit, on the radio energy saving intent instance, and probing capability values of a supported energy consumption target and a supported rate target may include: gradually increasing, by the domain management function unit, increments based on a current measurement value, to achieve better capability values of the energy consumption target and the rate target.

The better capability value is a suitable value, a recommended value, or a value with better performance that is selected from values of a plurality of groups of intent targets based on a simulation result. The values of the plurality of groups of intent targets include but are not limited to: the current measurement value, and the value determined based on the current measurement value by gradually increasing increments. For example, the intent target includes an energy consumption target and a rate target. In this case, better capability values, namely, values with better performance, are a group of values in which a maximum value of energy consumption is low and a minimum value of a rate is large and that are selected from a plurality of groups of energy consumption targets and downlink rate targets based on the simulation result.

For example, it is assumed that the intent target includes an energy consumption target and a downlink rate target, current measurement values are a maximum value of 40 kWh of energy consumption (that is, a value of the energy consumption is less than 40 kWh), and a minimum value of 400 Mbps of a downlink rate (that is, a value of the downlink rate is greater than 400 Mbps). If the maximum value of the energy consumption is increased to 50 kWh (that is, the value of the energy consumption is less than 50 kWh), the minimum value of the downlink rate obtained through simulation is 500 Mbps (that is, the value of the downlink rate is greater than 500 Mbps). A capability value of the energy consumption continues to be increased. If the maximum value of the energy consumption is increased to less than 60 kWh (that is, the value of the energy consumption is less than 60 kWh), a maximum value of the downlink rate obtained through the simulation is 500 Mbps (that is, the value of the downlink rate is greater than 500 Mbps). In this case, the values of the plurality of groups of energy consumption targets and downlink rate targets are respectively as follows: (1) Current measurement values: The value of the energy consumption is less than 40 kWh, and the value of the downlink rate is greater than 400 Mbps. Two groups of values determined through simulation by gradually increasing increments: (2) The capability value of the energy consumption is less than 50 kWh, and the capability value of the downlink rate is greater than 500 Mbps. (3) The capability value of the energy consumption is less than 60 kWh, and the capability value of the downlink rate is greater than 500 Mbps. Therefore, the better capability values selected from the foregoing three groups of values of the energy consumption target and the downlink rate target based on the simulation result is: The capability value of the energy consumption is less than 50 kWh, and the capability value of the downlink rate is greater than 500 Mbps. Compared with other groups of values, in this group of values, the minimum value of the rate is the largest, but the maximum value of the energy consumption is the smallest.

A manner in which the cross-domain management function unit performs simulation on the radio energy saving intent instance to obtain the better capability values of the energy consumption target and the downlink rate target is not limited in this application.

Optionally, the domain management function unit further determines a specific simulation manner and means based on the simulation evaluation constraint information. For example, when the online or offline indication information indicates online, simulation is performed online; or when the simulation technology is the NDT, simulation evaluation is performed by using the network digital twin, to obtain the radio energy saving intent probe report.

The radio energy saving intent probe report includes at least one intent probe result, where each intent probe result includes a capability value of an intent target (namely, an energy consumption target and a downlink rate target). For example, in an intent probe result 1, a capability value of energy consumption is less than 50 kWh, and a capability value of a downlink rate is greater than 500 Mbps; and in an intent probe result 2, a capability value of energy consumption is less than 100 kWh, and a capability value of a downlink rate is greater than 300 Mbps.

Optionally, the capability value of the intent target may further include a current capability value and a capability value at a prediction time point or within prediction duration. For example, in an intent probe result 3, a current capability value of energy consumption is less than 100 kWh, and a capability value of energy consumption at a prediction time point or within prediction duration is less than 50 kWh; and a current capability value of a downlink rate is greater than 600 Mbps, and a capability value of a downlink rate at a prediction time point or within prediction duration is greater than 500 Mbs.

S405: The domain management function unit sends the radio energy saving intent probe report to the cross-domain management function unit, and correspondingly, the cross-domain management function unit receives the radio energy saving intent probe report, where the radio energy saving intent probe report includes the identifier of the radio energy saving intent instance and at least one intent probe result.

Each intent probe result includes a name of an intent target (namely, an energy consumption target and a downlink rate target) and a corresponding capability value (which may include a current capability value and a capability value at a prediction time point or within prediction duration).

Optionally, the radio energy saving intent probe report may be referred to as an intent probe report (intent probe report) for short, and may be carried in an intent report for sending.

S406: The cross-domain management function unit determines the target value of the intent target in the radio energy saving intent instance based on the obtained radio energy saving intent probe report.

For example, when the radio energy saving intent probe report includes the two intent probe results, namely, the intent probe result 1 and the intent probe result 2 that are used as examples above, the cross-domain management function unit selects the intent probe result 1 to determine the target value in the radio energy saving intent instance. For example, a target value of the energy consumption is less than 50 kW, and a target value of the downlink rate is greater than 500 Mbps.

S407: The cross-domain management function unit sends the radio energy saving intent instance modification request to the domain management function unit, and correspondingly, the domain management function unit receives the radio energy saving intent instance modification request, where the radio energy saving intent instance modification request carries the identifier of the radio energy saving intent instance, the target value (namely, the target value of the energy consumption and the target value of the downlink rate) of the radio energy saving intent instance, and intent lifecycle indication information: fulfill.

Optionally, the radio energy saving intent instance modification request may also be referred to as a radio access network energy saving intent fulfilment request (request to configure RAN energy saving intent for fulfilment), and carries an intent target value (intent target value) and the intent execution purpose=fulfill. The intent target value is the target value of the intent target determined in step S406.

S408: The domain management function unit modifies the value of the intent lifecycle indication information in the radio energy saving intent instance to fulfill (before the modification, the value is probe), configures the target value of the radio energy saving intent instance (that is, configures the target value of the energy consumption in the radio energy saving intent instance to be less than 50 kWh, and the target value of the downlink rate to be greater than 500 Mbps), executes/fulfills the radio energy saving intent instance, and generates a radio energy saving intent fulfilment report.

As shown in FIG. 6, the domain management function unit fulfills the radio energy saving intent instance based on a resource of a network element (for example, a base station). Optionally, the intent fulfilment report (intent fulfilment report) may be carried in the intent report for sending.

Optionally, that the domain management function unit executes or fulfills the radio service intent instance, and generates the intent fulfilment report includes: The domain management function unit translates the radio energy saving intent instance into a radio energy saving configuration parameter, and configures and activates the radio energy saving configuration parameter for the network element. After executing the radio energy saving intent instance, the domain management function unit obtains a network performance indicator; and evaluates, based on the obtained network performance indicator, whether the intent target of the radio energy saving intent instance is satisfied, and obtains a radio energy saving intent fulfilment report. The radio energy saving intent fulfilment report includes an intent execution result (including whether the intent is satisfied and whether each intent target is satisfied), a current performance measurement value of each intent target, and the like.

S409: The domain management function unit sends the radio energy saving intent fulfilment report to the cross-domain management function unit, and correspondingly, the cross-domain management function unit receives the radio energy saving intent fulfilment report.

It can be learned that, in the intent handling method shown in FIG. 6, before delivering the target value of the intent target of the radio energy saving intent instance to the domain management function unit, the cross-domain management function unit may first obtain a capability value supported by a deployed network, and then select a better capability value as the target value of the radio energy saving intent instance, to avoid a case in which the target value cannot be reached due to a plurality of times of blind setting, or a case in which a better energy consumption effect and a better performance effect of the network cannot be obtained due to setting an excessively low target value. In other words, in embodiments of this application, before the radio energy saving intent instance is executed, capability value probe of the radio energy saving intent target is introduced, so that an operator can obtain a capability value of the current network for the radio energy saving target, to determine a better target value of the radio intent instance. This avoids a case in which the target value is set too high to be satisfied, and avoids a case in which the target value is set too low to fully stimulate a network capability.

In the foregoing embodiments provided in this application, the solutions of the methods provided in embodiments of this application are separately described from a perspective of the devices and from a perspective of the interaction between the devices. It may be understood that, to implement the foregoing functions, each device, for example, the first device, the second device, the cross-domain management function unit, or the domain management function unit, includes a corresponding hardware structure and/or software unit for performing each function. A person skilled in the art should easily be aware that, in combination with units and algorithm steps of the examples described in embodiments disclosed in this application, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

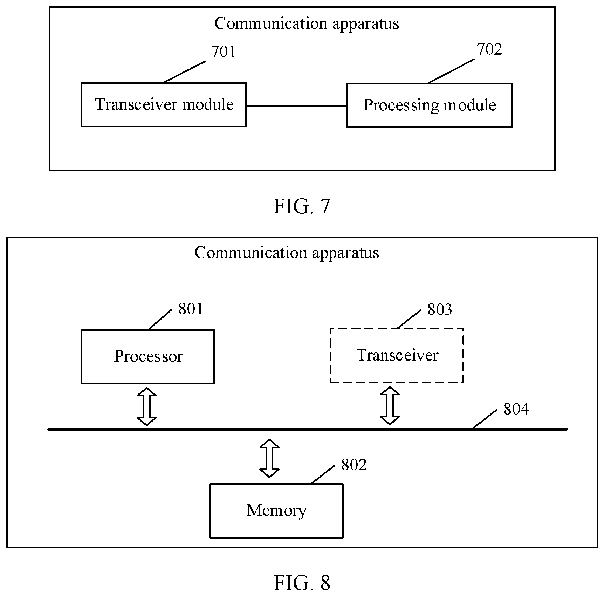

FIG. 7 is a diagram of a structure of a communication apparatus according to an embodiment of this application. The communication apparatus shown in FIG. 7 includes a transceiver module 701.

In a design of this embodiment, the communication apparatus is a device like an intent monitoring system, a first device, or a cross-domain management function unit, or a related apparatus in these devices.

In an example, the transceiver module 701 is configured to send first indication information, where the first indication information indicates a lifecycle management phase of an intent instance. The lifecycle management phase includes at least one of a feasibility check phase, a resource reservation phase, a probe phase, or a fulfilment phase of the intent instance. Correspondingly, the transceiver module 701 is further configured to receive an intent management result obtained for the intent instance in the lifecycle management phase.

In another example, the transceiver module 701 is configured to send first indication information, where the first indication information indicates a lifecycle management phase of a radio service intent instance. The lifecycle management phase includes at least one of a feasibility check phase, a resource reservation phase, or a fulfilment phase of the radio service intent instance. Correspondingly, the transceiver module 701 is further configured to receive an intent management result obtained for the radio service intent instance in the lifecycle management phase.

In still another example, the transceiver module 701 is configured to send first indication information, where the first indication information indicates a lifecycle management phase of a radio energy saving intent instance. The lifecycle management phase includes at least one of a probe phase or a fulfilment phase of the radio energy saving intent instance. Correspondingly, the transceiver module 701 is further configured to receive an intent management result obtained for the radio energy saving intent instance in the lifecycle management phase.

Optionally, the communication apparatus may further include a processing module 702, configured to determine the first indication information. Optionally, the communication apparatus may be further configured to implement functions and optional implementations of the intent monitoring system, the first device, or the cross-domain management function unit in embodiments shown in FIG. 1 to FIG. 6.

In another design of this embodiment, the communication apparatus is a device like an intent execution system, a second device, or a domain management function unit, or a related apparatus in these devices.

In an example, the transceiver module 701 is configured to receive first indication information, where the first indication information indicates a lifecycle management phase of an intent instance. The lifecycle management phase includes at least one of a feasibility check phase, a resource reservation phase, a probe phase, or a fulfilment phase of the intent instance. The transceiver module 701 is further configured to send an intent management result obtained for the intent instance in the lifecycle management phase. Optionally, the communication apparatus may further include a processing module 702, configured to manage the intent instance based on the lifecycle management phase indicated by the first indication information, to obtain the intent management result.

In another example, the transceiver module 701 is configured to receive first indication information, where the first indication information indicates a lifecycle management phase of a radio service intent instance. The lifecycle management phase includes at least one of a feasibility check phase, a resource reservation phase, or a fulfilment phase of the radio service intent instance. The transceiver module 701 is further configured to send an intent management result obtained for the radio service intent instance in the lifecycle management phase. Optionally, the communication apparatus may further include a processing module 702, configured to manage the radio service intent instance based on the lifecycle management phase indicated by the first indication information, to obtain the intent management result.

In still another example, the transceiver module 701 is configured to receive first indication information, where the first indication information indicates a lifecycle management phase of a radio energy saving intent instance. The lifecycle management phase includes at least one of a probe phase or a fulfilment phase of the radio energy saving intent instance. The transceiver module 701 is further configured to send an intent management result obtained for the radio energy saving intent instance in the lifecycle management phase. Optionally, the communication apparatus may further include a processing module 702, configured to manage the radio energy saving intent instance based on the lifecycle management phase indicated by the first indication information, to obtain the intent management result.

Optionally, when the communication apparatus is a device like the intent execution system, the second device, or the domain management function unit, or a related apparatus in these devices, the communication apparatus is further configured to implement functions and optional implementations of these devices in embodiments shown in FIG. 1 to FIG. 6.

FIG. 8 is a diagram of a structure of another communication apparatus according to an embodiment of this application. The communication apparatus shown in FIG. 8 includes at least one processor 801. Optionally, the communication apparatus further includes a memory 802 and/or a transceiver 803. In this embodiment of this application, a specific connection medium between the processor 801 and the memory 802 is not limited. In FIG. 8, for example, the memory 802 and the processor 801 are connected through a bus 804. The bus 804 is represented by a bold line in the figure. A connection manner between other components is merely an example for description, and imposes no limitation. The bus 804 may be classified into an address bus, a data bus, a control bus, and the like. For ease of representation, only one bold line is used to represent the bus in FIG. 8, but this does not mean that there is only one bus or only one type of bus.

The processor 801 may have a data transceiver function, and can communicate with another device. In the apparatus shown in FIG. 8, an independent data transceiver module, for example, the transceiver 803, may be further arranged and configured to receive and send data. When communicating with the another device, the processor 801 may perform data transmission through the transceiver 803.

In an example, when an intent monitoring system, a first device, or a cross-domain management function unit uses the form shown in FIG. 8, the processor 801 in FIG. 8 may invoke computer-executable instructions stored in the memory 802, to cause the intent monitoring system, the first device, or the cross-domain management function unit to perform the method corresponding to the intent monitoring system, the first device, or the cross-domain management function unit in any one of embodiments in FIG. 1 to FIG. 6.

In an example, when an intent execution system, a second device, or a domain management function unit uses the form shown in FIG. 8, the processor 801 in FIG. 8 may invoke computer-execution instructions stored in the memory 802, to cause the intent execution system, the second device, or the domain management function unit to perform the method performed by the intent execution system, the second device, or the domain management function unit in any one of embodiments in FIG. 1 to FIG. 6.

An embodiment of this application further provides a communication system. The system may include the intent monitoring system, the first device, or the cross-domain management function unit in FIG. 1 to FIG. 6, and further include the intent execution system, the second device, or the domain management function unit in FIG. 1 to FIG. 6. For details, refer to the foregoing method embodiments.

The solutions described in this application may be implemented in various manners. For example, the technologies may be implemented by hardware, software, or a combination thereof. For hardware implementation, a processing module configured to perform these technologies at a communication apparatus (for example, a base station, a terminal, a network entity, or a chip) may be implemented in one or more general-purpose processors, a digital signal processor (digital signal processor, DSP), a digital signal processing device, an application-specific integrated circuit (application-specific integrated circuit, ASIC), a programmable logic device, a field programmable gate array (field programmable gate array, FPGA), or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium, storing instructions, and the instructions, when executed by a computer, cause a computer device to implement a function in any one of the foregoing method embodiments through a transceiver and a processor.

This application further provides a computer program product, where the computer program product, when executed by a computer, causes a computer device to implement a function in any one of the foregoing method embodiments through a transceiver and a processor.

This application further provides a processing apparatus. The processing apparatus may be a product like a chip apparatus. The processing apparatus is configured to determine related information needed in any one of embodiments in FIG. 1 to FIG. 6. For example, the processing apparatus is configured to determine a model obtaining response. For another example, the processing apparatus is configured to perform fine tuning in a transfer learning manner by using a to-be-migrated model, to obtain a needed model, and the like. Optionally, the processing apparatus may be a baseband processing module, and information determined by the processing apparatus may be sent through a radio frequency processing module, for example, a migrated model or a to-be-migrated model. Alternatively, information sent by another device is received through the radio frequency processing module, and the processing apparatus determines other information based on the information.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, all or some of the procedures or functions described in embodiments of this application are produced. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical block) and steps (step) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the scope of embodiments of this application.

It may be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, in this application, "when", "if", and "in a case of" mean that an apparatus performs corresponding processing in an objective case, but do not constitute any limitation on time, do not require the apparatus to necessarily have a determining action during implementation, and do not mean any other limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more". In the text descriptions of this application, "including at least one of A, B, and C" may indicate: including A, including B, including C, including A and B, including A and C, including B and C, and including A, B, and C. In the text descriptions of this application, the term "and/or" describes only an association relationship between associated objects and represents that three relationships may exist. For example, A and/or B may represent the following three cases: Only A exists, both A and B exist, and only B exists. A may be singular or plural, and B may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, the terms "system" and "network" may be used interchangeably in this specification.

"Predefine" in this application may be understood as "define", "predefine", "store", "pre-store", "pre-negotiate", "preconfigure", "solidify", or "pre-burn".

A person of ordinary skill in the art may understand that, for the purpose of convenient and brief description, for detailed working processes of the foregoing system, apparatuses, and units, refer to corresponding processes in the foregoing method embodiments. Details are not described herein again.

For same or similar parts in embodiments of this application, refer to each other. In embodiments of this application and the implementations/implementation methods/feasible methods in embodiments, unless otherwise specified or a logical conflict occurs, terms and/or descriptions are consistent and may be mutually referenced between different embodiments and between the implementations/implementation methods/feasible methods in embodiments. Technical features in the different embodiments and the implementations/implementation methods/feasible methods in embodiments may be combined to form a new embodiment, implementation, or implementation method, or feasible method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An intent handling method, wherein the method further comprises:
sending first indication information, wherein the first indication information indicates a lifecycle management phase of an intent instance, wherein
the lifecycle management phase comprises at least one of a feasibility check phase, a resource reservation phase, a probe phase, or a fulfilment phase of the intent instance; and
receiving an intent management result obtained for the intent instance in the lifecycle management phase.

2. The method according to claim 1, wherein the sending the first indication information comprises:
sending a first request, wherein the first request is used to request to create the intent instance, the first request comprises intent information and the first indication information, and the intent information comprises an intent object and an intent target that are of the intent instance.

3. The method according to claim 1 or 2, wherein
the lifecycle management phase indicated by the first indication information comprises the feasibility check phase; and
the intent management result obtained for the intent instance in the lifecycle management phase comprises a feasibility check result obtained for the intent instance in the feasibility check phase.

4. The method according to any one of claims 1 to 3, wherein
the lifecycle management phase indicated by the first indication information comprises the resource reservation phase; and
the intent management result obtained for the intent instance in the lifecycle management phase comprises a resource reservation result obtained for the intent instance in the resource reservation phase.

5. The method according to any one of claims 1 to 4, wherein
the lifecycle management phase indicated by the first indication information comprises the probe phase; and
the intent management result obtained for the intent instance in the lifecycle management phase comprises an intent probe result obtained for the intent instance in the probe phase, wherein each intent probe result comprises a capability value of the intent target of the intent instance.

6. The method according to claim 5, wherein the method further comprises:
determining a target value of the intent target based on the intent probe result obtained for the intent instance in the probe phase; and
sending the target value of the intent target.

7. The method according to any one of claims 3 to 6, wherein the method further comprises:
sending second indication information, wherein the second indication information indicates to modify the lifecycle management phase of the intent instance to the fulfilment phase; and
receiving an intent execution result obtained for the intent instance in the fulfilment phase.

8. The method according to claim 3, 5, or 6, wherein the method further comprises:
sending first evaluation constraint information, wherein the first evaluation constraint information comprises indication information indicating a simulation technology, and/or indication information indicating to perform online simulation or offline simulation.

9. The method according to any one of claims 1 to 8, wherein the intent instance is a radio service intent instance, an intent object of the radio service intent instance comprises geographical coverage area information of a network device or a cell, and an intent target of the radio service intent instance comprises a delay target and/or a rate target.

10. The method according to any one of claims 1 to 8, wherein the intent instance is a radio energy saving intent instance, an intent object of the radio energy saving intent instance comprises geographical coverage area information of a network device or a cell, and an intent target of the radio energy saving intent instance comprises an energy consumption target and/or a rate target.

11. An intent handling method, wherein the method comprises:
receiving first indication information, wherein the first indication information indicates a lifecycle management phase of an intent instance, wherein
the lifecycle management phase comprises at least one of a feasibility check phase, a resource reservation phase, a probe phase, or a fulfilment phase of the intent instance; and
sending an intent management result obtained for the intent instance in the lifecycle management phase.

12. The method according to claim 11, wherein the receiving the first indication information comprises:
receiving a first request, wherein the first request comprises intent information and the first indication information, and the intent information comprises an intent object and an intent target that are of the intent instance; and
the method further comprises:
creating the intent instance based on the intent information.

13. The method according to claim 11 or 12, wherein
the lifecycle management phase indicated by the first indication information comprises the feasibility check phase; and
the intent management result obtained for the intent instance in the lifecycle management phase comprises a feasibility check result obtained for the intent instance in the feasibility check phase.

14. The method according to claim 13, wherein the method further comprises:
performing feasibility check on the intent instance to obtain the feasibility check result.

15. The method according to any one of claims 11 to 14, wherein
the lifecycle management phase indicated by the first indication information comprises the resource reservation phase; and
the intent management result obtained for the intent instance in the lifecycle management phase comprises a resource reservation result obtained for the intent instance in the resource reservation phase.

16. The method according to claim 15, wherein the method further comprises:
reserving a corresponding resource for the intent instance, to obtain the resource reservation result.

17. The method according to any one of claims 11 to 14, wherein
the lifecycle management phase indicated by the first indication information comprises the probe phase; and
the intent management result obtained for the intent instance in the lifecycle management phase comprises an intent probe result obtained for the intent instance in the probe phase, wherein each intent probe result comprises a capability value of the intent target of the intent instance.

18. The method according to claim 17, wherein the method further comprises:
performing probe evaluation on the intent target of the intent instance, to obtain the intent probe result.

19. The method according to claim 17 or 18, wherein the method further comprises:
receiving a target value of the intent target, wherein the target value of the intent target is determined based on the capability value of the intent target.

20. The method according to any one of claims 13 to 19, wherein the method further comprises:
receiving second indication information, wherein the second indication information indicates to modify the lifecycle management phase of the intent instance to the fulfilment phase; and
sending an intent execution result obtained for the intent instance in the fulfilment phase.

21. The method according to any one of claims 13, 14, or 17 to 19, wherein the method further comprises:
receiving evaluation constraint information, wherein the evaluation constraint information comprises indication information indicating a simulation technology, and/or indication information indicating to perform online simulation or offline simulation.

22. The method according to any one of claims 11 to 21, wherein the intent instance is a radio service intent instance, an intent object of the radio service intent instance comprises geographical coverage area information of a network device or a cell, and an intent target of the radio service intent instance comprises a delay target and/or a rate target.

23. The method according to any one of claims 11 to 21, wherein the intent instance is a radio energy saving intent instance, an intent object of the radio energy saving intent instance comprises geographical coverage area information of a network device or a cell, and an intent target of the radio energy saving intent instance comprises an energy consumption target and/or a rate target.

24. A communication apparatus, comprising one or more functional units, wherein the one or more functional units are configured to perform the method according to any one of claims 1 to 10 or the method according to any one of claims 11 to 23.

25. A communication apparatus, comprising a processor, wherein the processor invokes a computer program stored in a memory, to cause the communication apparatus to implement the method according to any one of claims 1 to 10 or the method according to any one of claims 11 to 23.

26. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to any one of claims 11 to 23 through a logic circuit or by executing code instructions.

27. A communication system, comprising at least one of the following apparatuses: an apparatus configured to perform the method according to any one of claims 1 to 10 or an apparatus configured to perform the method according to any one of claims 11 to 23.

28. A computer-readable storage medium, wherein the computer-readable storage medium stores a computer program; and when the computer program runs, the method according to any one of claims 1 to 10 or the method according to any one of claims 11 to 23 is implemented.

29. A computer program product comprising instructions, wherein when the instructions are run on a computer, the computer is caused to perform the method according to any one of claims 1 to 10 or the method according to any one of claims 11 to 23.
